(19) Europäisches Patentamt
European Patent Office
Office européen des brevets

(11) EP 4 318 670 A1

(12) # EUROPEAN PATENT APPLICATION
published in accordance with Art. 153(4) EPC

(43) Date of publication:
**07.02.2024 Bulletin 2024/06**

(21) Application number: **22934329.8**

(22) Date of filing: **01.04.2022**

(51) International Patent Classification (IPC):
***H01M 4/58*** *(2010.01)* ***H01M 4/62*** *(2006.01)*

(52) Cooperative Patent Classification (CPC):
**H01M 4/58; H01M 4/62;** Y02E 60/10

(86) International application number:
**PCT/CN2022/084848**

(87) International publication number:
**WO 2023/184493 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **FAN, Yanhuang**
  **NINGDE CITY, Fujian 352100 (CN)**
- **FENG, Lingyun**
  **NINGDE CITY, Fujian 352100 (CN)**

(74) Representative: **Kraus & Lederer Patentanwälte PartGmbB**
**Thomas-Wimmer-Ring 15**
**80539 München (DE)**

(54) **POSITIVE ELECTRODE ACTIVE MATERIAL COMPOSITION, POSITIVE ELECTRODE SHEET, SECONDARY BATTERY, BATTERY MODULE, BATTERY PACK, AND ELECTRICAL DEVICE**

(57) The present application provides a positive electrode active material composition, a positive electrode plate, a secondary battery, a battery module, a battery pack and an electric device. In particular, the present application provides a positive electrode active material composition including a positive electrode active material and a dispersant. The positive electrode active material composition of the present application can improve the problems of poor dispersion of the positive electrode active material powder and high viscosity of the slurry during the preparation of the positive electrode slurry, and can further improve the flexibility of the positive electrode plate.

EP 4 318 670 A1

## Description

### TECHNICAL FIELD

The present application relates to the field of battery technology, and in particular to a positive electrode active material composition, a positive electrode plate, a secondary battery, a battery module, a battery pack and an electric device.

### BACKGROUND

Secondary batteries are widely used in different fields such as new energy vehicles and energy storage power plants because of their advantages of high energy density, long service life and energy saving and environmental protection. The positive electrode plate of a secondary battery mainly includes a current collector and an electrode film layer containing a positive electrode active material. The positive electrode active material can be formed into a positive electrode slurry together with a dispersion medium and coated on the current collector of the electrode to form the positive electrode plate.

The positive electrode active material is usually used in the form of powder. Due to the large specific surface area and small particles of the positive electrode material powder, it is difficult to disperse the powder during the preparation of positive electrode slurry, the slurry viscosity is high and the solid content is difficult to increase, which in turn leads to defects such as cracks, stripes, uneven weight, particle scratches or pinholes easily during the coating of the electrode plate.

### SUMMARY

The present application is carried out in view of the above subject matter, and one of the objectives is to provide a composition including a positive electrode active material and a flexible dispersant to improve the poor dispersion of the positive electrode active material powder and the high viscosity of the slurry during the preparation of the positive electrode slurry.

To achieve the above objective, the present application provides a positive electrode active material composition, a positive electrode plate, a secondary battery, a battery module including the secondary battery, a battery pack including the battery module, and an electric device including the secondary battery, the battery module or the battery pack.

A first aspect of the present application provides a positive electrode active material composition including a positive electrode active material and a dispersant, where,

the positive electrode active material has a chemical formula of $Li_aA_xMn_{1-y}B_yP_{1-z}C_zO_{4-n}D_n$, A includes one or more elements selected from Zn, Al, Na, K, Mg, Nb, Mo, and W, B includes one or more elements selected from Ti, V, Zr, Fe, Ni, Mg, Co, Ga, Sn, Sb, Nb, and Ge, C includes one or more elements selected from B (boron), S, Si, and N, D includes one or more elements selected from S, F, Cl, and Br, a is selected from a range of 0.9 to 1.1, x is selected from a range of 0.001 to 0.1, y is selected from a range of 0.001 to 0.5, z is selected from the range of 0.001 to 0.1, n is selected from a range of 0.001 to 0.1, and the positive electrode active material is electrically neutral;

the dispersant includes a polymer, and the polymer includes:

a first monomeric unit represented by Formula 1;

a second monomeric unit which is at least one selected from the group consisting of a monomeric unit represented by Formula 2 and a monomeric unit represented by Formula 3; and

a third monomeric unit which is at least one selected from the group consisting of a monomeric unit represented by Formula 4 and a monomeric unit represented by Formula 5;

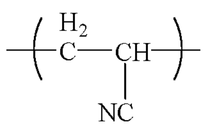

Formula 1

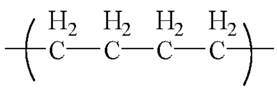

Formula 2

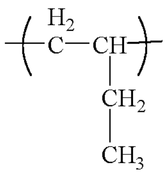

Formula 3

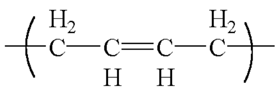

Formula 4

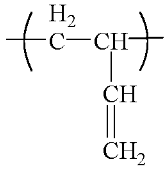

Formula 5.

In some embodiments, with respect to a total mass of the polymer, a mass percentage content of the first monomeric unit is M1, M1 is 10%-55%, optionally 25%-55%.

In some embodiments, with respect to a total mass of the polymer, a mass percentage content of the second monomeric unit is M2, M2 is 40%-80%, optionally 50%-70%.

In some embodiments, with respect to a total mass of the polymer, a mass percentage content of the third monomeric unit is M3, M3 is 0%-10% and optionally 0.001%-2%.

In some embodiments, M3/(M2+M3) is 0%-5%, optionally 0.001%-1%.

In some embodiments, the polymer is hydrogenated nitrile butadiene rubber.

In some embodiments, the polymer has a weight average molar mass of 50,000-500,000, optionally 150,000-350,000.

In some embodiments, with respect to a total mass of the positive electrode active material, the dispersant has a mass percentage content of X1, X1 is 0.05%-1%, optionally 0.1%-0.5%.

In some embodiments, the positive electrode active material composition further includes an infiltrant, the infiltrant has a surface tension of 20 mN/m-40 mN/m, and a molecular structure of the infiltrant includes at least one of the following functional groups: -CN, - $NH_2$, -NH-, -N-, - OH, -C=O, -COO-, -C(=O)-O-C(=O)-.

In some embodiments, the infiltrant includes one or more selected from a small-molecule organic solvent and a low-molecular-weight polymer;

the small-molecule organic solvent includes one or more selected from an alcohol amine compound, an alcohol compound, and a nitrile compound, optionally, the alcohol amine compound has a carbon atom number of 1-16, optionally 2-6;

the low-molecular-weight polymer includes one or more selected from a maleic anhydride-styrene copolymer, polyvinylpyrrolidone, polysiloxane, optionally, the low-molecular-weight polymer has a weight average molar mass of 6000 or less, optionally 3000-6000.

In some embodiments, with respect to a total mass of the positive electrode active material, a mass percentage content of the infiltrant is X2, X2 is 0.05%-2%, optionally 0.2%-0.8%.

In some embodiments, X1/X2 is 0.05-20, optionally 0.1-1, and further 0.3-0.8.

In some embodiments, A, C, and D are each independently any one element in respective ranges mentioned above, and B is at least two elements in the range thereof.

In some embodiments, A is any one element selected from Mg and Nb.

In some embodiments, B is at least two elements selected from Fe, Ti, V, Co, and Mg, optionally Fe with more than one element selected from Ti, V, Co, and Mg.

In some embodiments, C is S.
In some embodiments, D is F.
In some embodiments, x is selected from a range of 0.001-0.005.
In some embodiments, y is selected from a range of 0.01-0.5, optionally from a range of 0.25-0.5.
In some embodiments, z is selected from a range of 0.001-0.005.
In some embodiments, n is selected from a range of 0.001-0.005.
In some embodiments, (1-y):y is in a range of 1 to 4, optionally in a range of 1.5 to 3, and a:x is in a range of 9 to 1100, optionally in a range of 190 to 998.
In some embodiments, the positive electrode active material has a lattice change rate of 8% or less, optionally 4% or less.
In some embodiments, the positive electrode active material has a Li/Mn anti site-defect concentration of 2% or less, optionally 0.5% or less.
In some embodiments, the positive electrode active material has a surface oxygen valence state of -1.82 or less, optionally -1.89 to -1.98.
In some embodiments, the positive electrode active material has a compaction density at 3 T of 2.0 $g/cm^3$ or more, optionally 2.2 $g/cm^3$ or more.
In some embodiments, a surface of the positive electrode active material is coated with a carbon material.
A second aspect of the present application provides a positive electrode slurry including the

positive electrode active material composition of the first aspect of the present application; optionally also including one or more of a solvent, a positive electrode conductive agent, and a positive electrode binder.

In some embodiments, the solvent includes N-methylpyrrolidone (NMP).
In some embodiments, the positive electrode binder includes one or more selected from polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, vinylidene fluoride-hexafluoropropylene copolymers, and fluorinated acrylate resin.
In some embodiments, the positive electrode conductive agent includes one or more selected from superconducting carbon, acetylene black, carbon black, Ketjen black, carbon dots, carbon nanotubes, graphene, and carbon nanofibers.
In some embodiments, the positive electrode slurry has a solid content of 40%-70%, optionally 55%-65%.
In some embodiments, the positive electrode slurry has a viscosity of 3000 mpa.s-50,000 mpa.s at 20°C, optionally 10,000 mpa.s-20,000 mpa.s.
A third aspect of the present application provides a positive electrode plate including a positive electrode current collector and a positive electrode film layer disposed on at least one surface of the positive electrode current collector, the positive electrode film layer includes the positive electrode active material composition of the first aspect of the present application or is made by coating the positive electrode slurry of the second aspect of the present application.
Optionally, a coating method is selected from lifting method, film- pulling method, electrostatic spraying method and spin coating method.
In some embodiments, with respect to a total mass of the positive electrode film layer,

the positive electrode active material has a mass percentage content of W1, W1 is 90%-99.5%, optionally 95%-99%; and/or,

in some embodiments, the dispersant has a mass percentage content of W2, W2 is 1% or less, optionally 0.1%-0.5%; and/or,

in some embodiments, the infiltrant has a mass percentage content of W3, W3 is 2% or less, optionally 0.1%-0.5%; and/or,

in some embodiments, the positive electrode binder has a mass percentage content of W4, W4 is 5.5% or less, optionally 1%-3%; and/or,

In some embodiments, the positive electrode conductive agent has a mass percentage content of W5, W5 is 2.5% or less, optionally 0.1%-1%.
A fourth aspect of the present application provides a secondary battery, the positive electrode plate of the third aspect of the present application.

A fifth aspect of the present application provides a battery module including the positive electrode plate of the third aspect of the present application, or the secondary battery of the fourth aspect of the present application.
A sixth aspect of the present application provides a battery pack including the positive electrode plate of the third aspect of the present application, the secondary battery of the fourth aspect of the present application, or the battery module of the fifth aspect of the present application.
A seventh aspect of the present application provides an electric device including the positive electrode plate of the third aspect of the present application, or the secondary battery of the fourth aspect of the present application, or a battery module of the fifth aspect of the present application, or the battery pack of the sixth aspect of the present application.
The positive electrode active material composition provided in the present application can solve the problems of poor dispersion of positive electrode active material powder and high viscosity of slurry in the preparation of positive electrode slurry, and improve the processing performance of positive electrode slurry as well as the performance of secondary battery.

BRIEF DESCRIPTION OF THE DRAWINGS

FIG. 1 exemplarily shows the measurement device and measurement principle of a platinum plate method;

FIG. 2 is a schematic diagram of a secondary battery of an embodiment of the present application;

FIG. 3 is an exploded view of the secondary battery of the embodiment of the present application shown in FIG. 2;

FIG. 4 is a schematic diagram of a battery module of an embodiment of the present application;

FIG. 5 is a schematic diagram of a battery pack of an embodiment of the present application;

FIG. 6 is an exploded view of the battery pack of the embodiment of the present application shown in FIG. 5;

FIG. 7 is a schematic diagram of an electric device utilizing a secondary battery as a power source of an embodiment of the present application;

Reference numbers in the drawings are as follows:

1 battery pack; 2 upper container body; 3 lower container body; 4 battery module; 5 secondary battery; 51 casing; 52 electrode assembly; 53 top cover assembly

FIG. 8 exemplarily shows the instrumentation used and test procedure for the positive electrode slurry viscosity tests in an embodiment of the present application; and

FIG. 9 exemplarily shows the method of folding a filter in the slurry filtration performance tests in an embodiment of the present application.

DETAILED DESCRIPTION OF THE EMBODIMENTS

The implementations of the present application are described in further detail below in conjunction with the embodiments. The detailed description of the following embodiments is used to exemplarily illustrate the principles of the present application, but is not to be used to limit the scope of the present application, namely, the present application is not limited to the described embodiments.
Hereinafter, embodiments of the positive electrode active material composition, the positive electrode plate, the secondary battery, the battery module, the battery pack, and the electric device of the present application will be specifically disclosed. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art.
The "range" disclosed in the application is defined in the form of lower limit and upper limit, and the given range

is limited by selecting a lower limit and an upper limit, and the selected lower limit and upper limit define the boundary of a special range. Ranges defined in this manner may be inclusive or exclusive and may be combined arbitrarily, i.e., any lower limit may be combined with any upper limit to form a range. For example, if ranges of 60-120 and 80-110 are listed for a particular parameter, it is understood that ranges of 60-110 and 80-120 are contemplated. Additionally, if the minimum range values 1 and 2 are listed, and if the maximum range values 3, 4, and 5 are listed, the following ranges are all expected: 1-3, 1-4, 1-5, 2- 3, 2-4, and 2-5. In the present application, unless otherwise stated, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only an abbreviated representation of the combination of these values. In addition, when expressing that a certain parameter is an integer $\geq 2$, it is equivalent to disclosing that the parameter is an integer such as 2, 3, 4, 5, 6, 7, 8, 9, 10, 11, 12, etc.

Unless otherwise specified, all implementation modes and optional implementation modes of the present application may be combined with each other to form new technical proposals.

Unless otherwise specified, all technical features and optional technical features of the present application may be combined with each other to form new technical proposals.

Unless otherwise specified, all the steps in the present application may be performed sequentially or randomly, preferably sequentially. For example, the method including steps (a) and (b) means that the method may include steps (a) and (b) performed in sequence, and may also include steps (b) and (a) performed in sequence. For example, mentioning that the method may also include step (c), means that step (c) may be added to the method in any order, for example, the method may include steps (a), (b) and (c), may also include steps (a), (c) and (b), and may also include steps (c), (a) and (b).

Unless otherwise specified, "include" and "include" mentioned in the application represent an open type or a closed type. For example, the "include" and "include" may mean that other components not listed may be included or included, or only listed components may be included or included.

Unless otherwise specified, in the present application, the term "or" is inclusive. For example, the phrase "A or B" means "A, B, or both A and B." More specifically, the condition "A or B" is satisfied by either: A is true (or exists) and B is false (or does not exist); A is false (or does not exist) and B is true (or exists); or both A and B are true (or exist).

It should be noted that, herein, the median particle size $Dv_{50}$ is the particle size corresponding to a cumulative volume distribution of 50% of the positive electrode active material. In the present application, the median particle size $Dv_{50}$ of the positive electrode active material can be determined using laser diffraction particle size analysis. For example, with reference to the standard GB/T 19077-2016, a laser particle size analyzer (e.g. Malvern Master Size 3000) is used for the determination.

Herein, the term "coating layer" refers to a layer of material that is coated on the core, and the layer of material may completely or partially coat the core, and the term "coating layer" is used for descriptive purposes only and is not intended to limit the present application. Likewise, the term "thickness of the coating layer" refers to the thickness of the layer of substance coating the core in the radial direction of the core.

Herein, the term "source" refers to a compound that is a source of an element, and as examples, the types of "sources" include, but are not limited to, carbonates, sulfates, nitrates, monomers, halides, oxides, and hydroxides.

[Positive electrode active material composition]

A first aspect of the present application provides a positive electrode active material composition including a positive electrode active material and a dispersant, where

the positive electrode active material has a chemical formula $Li_aA_xM_{n1-y}B_yP_{1-z}C_zO_{4-n}D_n$, A includes one or more elements selected from Zn, Al, Na, K, Mg, Nb, Mo, and W, B includes one or more elements selected from Ti, V, Zr, Fe, Ni, Mg, Co, Ga, Sn, Sb, Nb, and Ge, C includes one or more elements selected from B (boron), S, Si, and N, D includes one or more elements selected from S, F, Cl and Br, a is selected from a range of 0.9 to 1.1, x is selected from a range of 0.001 to 0.1, y is selected from a range of 0.001 to 0.5, z is selected from a range of 0.001 to 0.1, n is selected from a range of 0.001 to 0.1, and the positive electrode active material is electrically neutral;

the dispersant includes a polymer, and the polymer includes:

a first monomeric unit represented by Formula 1;

a second monomeric unit being at least one selected from the group consisting of a monomeric unit represented by Formula 2 and a monomeric unit represented by Formula 3; and

a third monomeric unit being at least one selected from at least one of the group consisting of a monomeric unit

represented by Formula 4 and a monomeric unit represented by Formula 5;

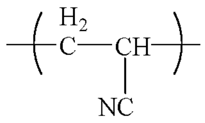

Formula 1

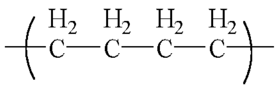

Formula 2

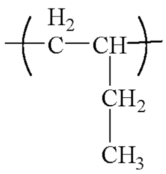

Formula 3

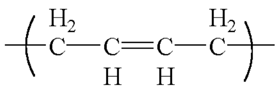

Formula 4

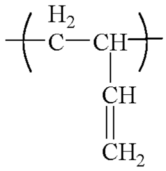

Formula 5.

The inventors found that the ratio between the first, second and third monomeric units may have an effect on the dispersing effect of the dispersant, which in turn affects the flow, viscosity and filtration performance of the positive electrode slurry and may also have an effect on the battery performance.

In some embodiments, with respect to a total mass of the polymer, a mass percentage content of the first monomeric unit is M1, with M1 being 10%-55% (e.g. 10%, 15%, 20%, 25%, 30%, 32%, 35%, 40%, 45%, 50%, or 55%), optionally 25%-55%. the mass percentage content of M1 affects the solubility of the polymer and brittleness of the electrode plate. If the mass percentage content of M1 exceeds 55%, it may lead to poor dispersion and/or poor electrode plate brittleness, and if the mass percentage content of M1 is below 10%, the polymer becomes less soluble in the solvent (e.g., NMP), which in turn makes the slurry inhomogeneous.

In some embodiments, with respect to the total mass of the polymer, a mass percentage content of the second monomeric unit is M2, with M2 being 40%-80% (e.g. 40%, 45%, 50%, 55%, 58%, 60%, 64%, 65%, 68%, 70%, 71%, 75%, or 80%), optionally 50%-70%. The mass percentage content of M2 affects the swelling of the polymer, the mass percentage content of M2 in the range of 40%-80% can ensure the weak polarity of the polymer and a better effect as a dispersant.

In some embodiments, with respect to the total mass of the polymer, the mass percentage content of the third monomeric unit is M3, with M3 being 0%-10% (e.g., 0.001%, 0.005%, 0.01%, 0.05%, 0.1%, 0.3%, 0.4%, 0.5%, 1%, 1.3%, 1.8%, 2%, 3%, 3.8%, 4%, 5%, 5.2%, 6%, 7%, 8%, 9%, or 10%), optionally 0.001%-2%. The mass percentage content of M3 affects the solubility of the polymer and the bonding with the positive electrode current collector (e.g., aluminum foil). If the percentage of M3 is too low, the bonding of the slurry is poor, and if the mass percentage content of M3 is too high, the polymer tends to dissolve in the electrolyte and affects the battery performance.

In some embodiments, M3/(M2+M3) is 0%-5% (e.g., 0.001%, 0.005%, 0.01%, 0.05%, 0.1%, 0.5%, 1%, 2%, 3%, 4%, or 5%), optionally 0.001%-1%.

In some embodiments, the polymer is a random copolymer.

In some embodiments, the polymer is hydrogenated nitrile butadiene rubber.

Nitrile butadiene rubber (NBR) is a random copolymer made by polymerizing acrylonitrile with butadiene monomers (e.g. emulsion polymerization), and its structural general formula is:

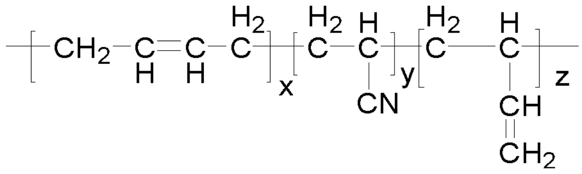

In NBR, the linkage of butadiene (B) and acrylonitrile (A) links is generally BAB, BBA or ABB, and ABA and BBB ternary groups, but with the increase of acrylonitrile content, there are also those who present as a AABAA quintuple linkage, and even become bulk polymers of acrylonitrile. In NBR, the sequence distribution of butadiene is mainly trans-1,4 structure, and its microstructure is related to the polymerization conditions. High polymerization temperatures decrease the trans-1,4 structure and increase the cis-1,4 and 1,2- structures.

Hydrogenated butadiene nitrile rubber (HNBR) is the product obtained by hydrogenation and saturation of the carbon-carbon double bond in the molecular chain of nitrile rubber, so it is also called highly saturated nitrile rubber. The chemical formula of hydrogenated nitrile butadiene rubber is as follows:

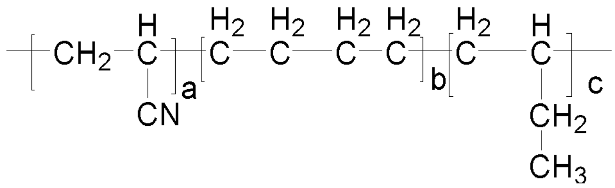

There are three main methods for the preparation of HNBR: ethylene-acrylonitrile copolymerization, NBR solution hydrogenation, and NBR emulsion hydrogenation.

Due to its weak polarity and good affinity with carbon-containing materials, HNBR can act on the particle surface of positive electrode active materials (especially carbon-containing positive electrode active materials) and avoid interparticle agglomeration through steric hindrance, while HNBR also has high strength and low glass transition temperature, which can improve the flexibility of the electrode plate.

In some embodiments, the polymer has a weight average molar mass of 50,000-500,000 (e.g., 50,000, 60,000, 70,000, 80,000, 90,000, 100,000, 150,000, 200,000, 250,000, 300,000, 350,000, 400,000, 450,000, or 500,000), optionally 150,000-350,000. When the molar mass of the polymer is lower than 50,000, the film-forming property of the slurry is poor, and it is viscoelastic in the positive electrode, and the electrode plate is prone to sticking to the roller when cold pressed; while when the molar mass of the polymer is larger, the solubility of the polymer becomes poor, which is not conducive to the dispersion of the slurry.

The dispersant hydrogenated nitrile butadiene rubber absorbs and swells more in the electrolyte and may affect the room-temperature direct current resistance (DCR) when added in excessive amounts. In some embodiments, with respect to a total mass of the positive electrode active material, the mass percentage of the dispersant is X1, with X1 being 0.05%-1% (e.g., 0.05%, 0.1%, 0.2%, 0.25%, 0.3%, 0.4%, 0.5%, 0.6%, 0.7%, 0.8%, 0.9%, or 1%), optionally 0.1%-0.5%. When X1 is 0.05%-1%, it can provide good dispersion effect, at the same time can avoid too much dispersant addition to affect the room-temperature DCR and influence the energy density of the battery.

In some cases, the positive electrode active material has a poor wettability in NMP (N-methylpyrrolidone) and in turn the slurry stability is poor, as evidenced by low solid content of the slurry, decrease in viscosity after placement, etc., which in turn cannot be used properly. The inventors found that functional groups containing N (such as -CN/-$NH_2$-/-N-, etc.), oxygen (such as -C=O/-COOH/-COOR/epoxy, etc.), or benzene rings have a better affinity for positive electrode active materials (especially those with a highly graphitized carbon cladding layer on the surface and with a microporous structure), and small-molecule infiltrant containing these functional groups can effectively improve the wettability of the positive electrode active material in solvents (e.g., N-methylpyrrolidone).

In some embodiments, the positive electrode active material composition further includes an infiltrant, the infiltrant has a surface tension of 20 mN/m to 40 mN/m, and the molecular structure of the infiltrant includes at least one (e.g., two or more) of the following functional groups: -CN, -$NH_2$, -NH-, -N-, -OH, -C=O, -COO-, -C(=O)-O- C(=O)-, epoxy group, and phenyl group. The surface tension of the infiltrant can be obtained using a surface tension meter following the measuring methods already known in the art.

An example measuring method can be the platinum plate method, which is based on the principle that when the sensing platinum plate is immersed into the measured liquid, the surface tension around the platinum plate will be affected, and the surface tension of the liquid will pull the platinum plate down as far as possible. When the surface tension of the liquid and other related forces and the equilibrium force reach an equilibrium, the immersion of the sensing platinum plate in the liquid will stop. At this point, the balance sensor of the instrument measures the immersion depth

and translates it into a surface tension value of the liquid.

In the specific testing process, the testing steps of the platinum plate method are: (1) gradually immersing the platinum plate into a liquid; (2) sensing the equilibrium value by the sensor in the immersed state beneath the liquid surface; (3) converting the sensed equilibrium value into the surface tension value and displaying the value.

The surface tension is calculated as follows:

$$P = mg + L\gamma \cdot \cos\theta - sh\rho g$$

Equilibrium force = gravity of the plate + sum of surface tension - buoyant force on the plate

(Upward) (Downward) (Upward)

m: Weight of platinum plate

g : Gravity (9.8 N/ Kg)

L : Perimeter of the platinum plate

$\gamma$ : Surface tension of the liquid

$\theta$ : Contact angle between liquid and platinum plate

s : Cross-sectional area of platinum plate

h : Depth of immersion of the platinum plate

$\rho$ : Density of the liquid

FIG. 1 exemplarily shows the measurement device and measurement principle of the platinum plate method.

In some embodiments, the infiltrant includes one or more selected from small-molecule organic solvents and low-molecular-weight polymers.

The small-molecule organic solvent includes one or more selected from alcoholic amines, alcoholic compounds, nitrile compounds, optionally, the alcoholic amines have a carbon atom number of 1-16, optionally 2-6; for example, isopropanolamine, 2-amino-2methyl-1-propanol;

The low-molecular-weight polymer includes one or more selected from maleic anhydride-styrene copolymers, polyvinylpyrrolidone, polysiloxanes, optionally, the low-molecular-weight polymer has a weight average molar mass of 6000 or less, such as 70-6000 (e.g., 70-100, 100-500, 500-1000, 1000-2000, 2000-3000, 3000-4000, 4000-5000, or 5000-6000), optionally 3000-6000.

In some embodiments, with respect to the total mass of the positive electrode active material, the mass percentage content of the infiltrant is X2, with X2 being 0.05%-2% (e.g., 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, or 2%), and optionally 0.2%-0.8%. When X2 is 0.05%-2%, it can provide a good infiltration effect, but also avoid too much infiltrant addition that can affect the stability of the positive electrode or electrolyte or affect the performance of the battery (e.g. cycling performance).

In some embodiments, X1/X2 is 0.05-20 (e.g., 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 3, 4, 5, 10, 15, or 20), optionally 0.1-1, further 0.3-0.8. When the ratio of dispersant to the infiltrant is within the above range, the positive electrode slurry has lower viscosity and better flowability and filterability.

For the positive electrode active material, the inventors of the present application have repeatedly studied the effects of doping the Li, Mn, P, and O sites of lithium manganese phosphate with various elements, and found that by doping specific elements in specific amounts at the above four sites simultaneously, significantly improved multiplicity performance, improved cycling performance and/or high temperature stability can be obtained, resulting in an improved lithium manganese phosphate positive electrode active material.

The positive electrode active material of the present application is obtained by element doping in the compound $LiMnPO_4$, where A, B, C and D are elements doped at the Li, Mn, P and O sites of the compound $LiMnPO_4$, respectively. Without bound to theory, it is now believed that the performance enhancement of lithium manganese phosphate is related

to the reduction of the lattice change rate and the reduction of surface activity of lithium manganese phosphate in the process of lithium intercalation and deintercalation. Reducing the lattice change rate can reduce the difference in lattice constants between the two phases at the grain boundary, reduce the interfacial stress, and enhance the transport capability of $Li^+$ at the interface, thus improving the rate performance of the positive electrode active material. In contrast, high surface activity tends to lead to serious interfacial side reactions, which intensify gas production and electrolyte consumption and damage the interface, thus affecting the performance of the battery such as cycling. In the present application, the lattice change rate is reduced by Li- and Mn-site doping, and the Mn-site doping also effectively reduces the surface activity, thus inhibiting Mn exsolution and interfacial side reactions between the positive electrode active material and the electrolyte. P-site doping makes the change rate of the Mn-O bond length faster, lowers the small polaron migration barrier of the material, and thus is beneficial to the electronic conductivity. O-site doping has a good effect on reducing the side reactions at the interface. P- and O-site doping also affects the Mn exsolution and kinetic properties of the antisite defects. Thus, doping reduces the concentration of antisite defects in the material, improves the kinetic properties and gram capacity of the material, and also changes the morphology of the particles, thus enhancing the compaction density. The present applicant unexpectedly found that by doping the Li, Mn, P and O sites of the compound $LiMnPO_4$ with specific elements at the same time in specific amounts, significantly improved rate performance could be obtained, while the exsolution of Mn and Mn-sites doping elements was significantly reduced, significantly improved cycling performance and/or high-temperature stability was obtained, and the gram capacity and compaction density of the material could be improved.

Optionally, A is one or more elements selected from Zn, Al, Na, K, Mg, Nb, Mo, and W, B is one or more elements selected from Ti, V, Zr, Fe, Ni, Mg, Co, Ga, Sn, Sb, Nb, and Ge, C is one or more elements selected from B (boron), S, Si, and N, D is one or more elements selected from S, F, Cl, and Br.

In some embodiments, A, C, and D are each independently any one of the elements in the respective ranges described above, and B is at least two elements in the respective range.

In some embodiments, A is any one element selected from Mg and Nb.

In some embodiments, B is at least two elements selected from Fe, Ti, V, Co, and Mg, optionally Fe with more than one element selected from Ti, V, Co, and Mg.

In some embodiments, C is S.

In some embodiments, D is F.

By selecting the Li-site doping elements in the above range, the lattice change rate in the lithium deintercalation process can be further reduced, thus further improving the rate performance of the battery. By selecting Mn-site doping elements in the above range, the electronic conductivity can be further increased and the lattice change rate can be further reduced, thus improving the rate performance and gram capacity of the battery. By selecting P-site doping elements in the above range, the rate performance of the battery can be further improved. By selecting O-site doping elements in the above range, the side reactions at the interface can be further reduced and the high-temperature performance of the battery can be improved.

In some embodiments, x is selected from the range of 0.001 to 0.005 (e.g., 0.001, 0.002, 0.003, 0.004, or 0.005).

In some embodiments, y is selected from the range of 0.01 to 0.5 (e.g., 0.01, 0.02, 0.03, 0.04, 0.05, 0.1, 0.15, 0.2, 0.25, 0.3, 0.35, 0.4, 0.45, or 0.5), optionally from the range of 0.25 to 0.5.

In some embodiments, z is selected from the range of 0.001 to 0.005 (e.g., 0.001, 0.002, 0.003, 0.004, or 0.005).

In some embodiments, n is selected from the range of 0.001 to 0.005 (e.g., 0.001, 0.002, 0.003, 0.004, or 0.005).

By choosing the y value within the above range, the gram capacity of the material and rate performance can be further enhanced. By choosing the x value within the above range, the kinetic performance of the material can be further improved. By selecting the z value within the above range, the rate performance of the secondary battery can be further improved. By selecting the n value within the above range, the high-temperature performance of the secondary battery can be further improved.

In some embodiments, (1-y):y is in the range of 1 to 4 (e.g., 1, 1.5, 2, 2.5, 3, 3.5, or 4), optionally in the range of 1.5 to 3, and a:x is in the range of 9 to 1100 (e.g., 9-10, 10-20, 20-50, 50-100, 100-150, 150-190, 190-200, 200-300, 300-500, 500-700, 700-900, 900-998, 998-1000 or 1000-1100), optionally in the range of 190-998. Here, y refers to the sum of the stoichiometric numbers of the Mn-site doping elements. The energy density and cycling performance of the positive electrode active material can be further improved when the above conditions are satisfied.

In some embodiments, the positive electrode active material has a lattice change rate of 8% or less (e.g., 0.001%, 0.005%, 0.01%, 0.05%, 0.1%, 0.5%, 1%, 2%, 3%, 4%, 5%, 6%, 7%, or 8%), optionally 4% or less. By reducing the lattice change rate, it is possible to make transport of Li ions easier, i.e., the mobility of Li ions in the material is higher, which is conducive to improving the rate performance of the secondary battery. The lattice change rate can be measured by methods known in the art, such as X-ray diffraction (XRD).

In some embodiments, the positive electrode active material has a Li/Mn anti site-defects concentration of 2% or less (e.g., 0.001%, 0.005%, 0.01%, 0.05%, 0.1%, 0.5%, 1%, or 2%), optionally 0.5% or less. Li/Mn antisite defects mean that the sites of $Li^+$ interchange with the sites of $Mn^{2+}$ in the $LiMnPO_4$ lattice. Li/Mn antisite-defects concentration

refers to the percentage of $Li^+$ interchanged with $Mn^{2+}$ in the positive electrode active material to the total amount of $Li^+$. Antisite $Mn^{2+}$ hinders the transport of $Li^+$, and by reducing the Li/Mn anti site-defects concentration, it is beneficial to improve the gram capacity and rate performance of the positive electrode active material. The Li/Mn anti site-defects concentration can be measured by methods known in the art, such as XRD.

In some embodiments, the surface oxygen valence of the positive electrode active material is -1.82 or less (e.g., -1.82, -1.85, -1.86, -1.89, -1.98, -1.97, -1.96, or -1.95), optionally - 1.89 to -1.98. By reducing the surface oxygen valence, the interfacial side reactions between the positive electrode active material and the electrolyte can be reduced, thereby improving cycle performance and high-temperature stability of the secondary battery. The surface oxygen valence can be measured by methods known in the art, such as by electron energy loss spectroscopy (EELS).

In some embodiments, the compaction density of the positive electrode active material at 3 T is 2.0 g/cm$^3$ or higher (e.g., 2.0 g/cm$^3$, 2.1 g/cm$^3$, 2.2 g/cm$^3$, 2.3 g/cm$^3$, 2.4 g/cm$^3$, or 2.5 g/cm$^3$), optionally 2.2 g/cm$^3$ or higher. The higher the compaction density, the greater the weight of active material per unit volume, so increasing the compaction density is conducive to improving the volumetric energy density of the battery. The compaction density can be measured according to GB/T 24533-2009. In some embodiments, the surface of the positive electrode active material is coated with a carbon material. As a result, the electrical conductivity of the positive electrode active material can be improved.

In some embodiments, the positive electrode active material may be prepared by a method including the steps of:

Step (1): dissolving a manganese source, a source of element B, and an acid in a solvent, stirring to produce a suspension of manganese salt doped with element B, filtering the suspension, and drying a filter cake to obtain the manganese salt doped with element B;

Step (2): adding a lithium source, a phosphorus source, a source of element A, a source of element C, a source of element D, a solvent, and the manganese salt doped with element B obtained from step (1) to the reaction vessel and grinding and mixing to obtain a slurry;

Step (3): transferring the slurry obtained from step (2) to a spray drying equipment for spray drying granulation to obtain granules; and

Step (4): sintering the granules obtained from step (3) to obtain the positive electrode active material.

In some embodiments, the stirring in step (1) is carried out at a temperature in the range of 60-120°C (e.g., 80°C).

In some embodiments, the stirring in step (1) is carried out by stirring at a rate of 200-800 rpm (e.g., 600 rpm).

In some embodiments, the source of element A is at least one selected from monomers of element A, oxides of element A, phosphates of element A, oxalates of element A, carbonates of element A, and sulfates of element A, the source of element B is at least one selected from monomers of element B, oxides of element B, phosphates of element B, oxalates of element B, carbonates of element B, and sulfates of element B, the source of element C is at least one selected from sulfates of element C, borates of element C, nitrates of element C, and silicates of element C, and the source of element D is at least one selected from monomers of element D and ammonium salts of element D.

In some embodiments, the grinding and mixing in step (2) is carried out for 8-15 hours (e.g. 10 hours).

In some embodiments, the sintering in step (4) is carried out in the temperature range of 600-900°C (e.g. 700°C) for 6-14 hours (e.g. 10 hours).

[Positive electrode slurry]

A second aspect of the present application provides a positive electrode slurry including the positive electrode active material composition of the first aspect of the present application; optionally also including one or more of a solvent, a positive electrode conductive agent, and a positive electrode binder.

In some embodiments, the positive electrode slurry includes a solvent, optionally, the solvent includes N-methylpyrrolidone (NMP).

In some embodiments, the positive electrode slurry includes a positive electrode binder. Optionally, the positive electrode binder includes one or more selected from polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, vinylidene fluoride-hexafluoropropylene copolymers, and fluorinated acrylate resin.

In some embodiments, the positive electrode slurry includes a positive electrode conductive agent. Optionally, the positive electrode conductive agent includes one or more selected from superconducting carbon, acetylene black, carbon black, Ketjen black, carbon dots, carbon nanotubes, graphene, and carbon nanofibers.

In the present application, the solid content of the positive electrode slurry can be enhanced, and/or the viscosity of the positive electrode slurry can be reduced, by selecting a suitable dispersant and/or infiltrant.

In some embodiments, the positive electrode slurry has a solid content of 40%-70% (e.g., 40%, 45%, 50%, 55%, 58%, 60%, 64%, 65%, 68%, or 70%), optionally 55%-65%.

In some embodiments, the positive electrode slurry has a viscosity of 3000mpa.s-50,000mpa.s at 20°C (e.g. 3000 mpa.s, 4000 mpa.s, 5000 mpa.s, 6000 mpa.s, 7000 mpa.s, 8000 mpa.s, 9000 mpa.s, 10,000 mpa.s, 11000 mpa.s, 12000 mpa.s, 13000 mpa.s, 14000 mpa.s, 15000 mpa.s, 16000 mpa.s, 17000 mpa.s, 18000 mpa.s, 19000 mpa.s, 20000 mpa.s, 30000 mpa.s, 40000 mpa.s, or 50,000 mpa.s), and optionally 10,000 mpa.s-20,000 mpa.s.

[Positive electrode plate]

A third aspect of the present application provides a positive electrode plate including a positive electrode current collector and a positive electrode film layer provided on at least one surface of the positive electrode current collector, the positive electrode film layer includes the positive electrode active material composition of the first aspect of the present application or is prepared by coating the positive electrode slurry of the second aspect of the present application. The positive electrode film layer may be disposed on one surface of the positive electrode current collector, or may be provided on both surfaces of the positive electrode current collector.

In some embodiments, with respect to a total mass of the positive electrode film layer,

the mass percentage content of the positive electrode active material is W1, with W1 being 90%-99.5% (e.g., 90%, 91%, 92%, 93%, 94%, 95%, 96%, 97%, 98%, 99%, or 99.5%), optionally 95% -99%; and/or

in some embodiments, the dispersant has a mass percentage content of W2, with W2 being 1% or less (e.g., 0.001%, 0.005%, 0.01%, 0.05%, 0.1%, 0.2%, 0.3%, 0.4%, 0.5%, or 1%), optionally 0.1%-0.5%; and/or

in some embodiments, the infiltrant has a mass percentage content of W3, with W3 being 2% or less (e.g., 0.001%, 0.005%, 0.01%, 0.05%, 0.1%, 0.2%, 0.3%, 0.4%, 0.5%, 1%, or 2%), optionally 0.1%-0.5%; and/or

in some embodiments, the positive electrode binder has a mass percentage content of W4, with W4 being 5.5% or less (e.g., 0.001%, 0.005%, 0.01%, 0.05%, 0.1%, 0.5%, 1%, 1.2%, 1.5%, 2%, 2.3%, 2.5%, 2.7%, 3%, 4%, 5%, or 5.5%), optionally 1% to 3%; and/or.

In some embodiments, the positive electrode conductive agent has a mass percentage content of W5, with W5 being 2.5% or less (e.g., 0.001%, 0.005%, 0.01%, 0.05%, 0.1%, 0.2%, 0.3%, 0.4%, 0.5%, 0.6%, 0.7%, 0.8%, 0.9%, 1%, 2%, or 2.5%), optionally 0.1%-1%.

In some embodiments, the positive electrode current collector may be a metal foil or a composite current collector. For example, as a metal foil, an aluminum foil may be used. The composite current collector may include a base layer of high polymer material and a metal layer formed on at least one surface of the base layer of high polymer material. The composite current collector may be formed by forming a metal material (aluminum, an aluminum alloy, nickel, a nickel alloy, titanium, a titanium alloy, silver and a silver alloy, etc.) on a high polymer base material (such as a base material of polypropylene (PP), polyethylene terephthalate (PET), polybutylene terephthalate (PBT), polystyrene (PS), polyethylene (PE), etc.).

In some embodiments, one or more under-coating layers between the positive electrode current collector and the positive electrode film layer are also provided to increase the bond between the positive electrode current collector and the positive electrode film layer. In some embodiments, the under-coating layer includes a polyacrylic acid-acrylate copolymer (e.g., polyacrylic acid-acrylate copolymer having a weight average molar mass of 300,000-350,000) and a conductive agent (e.g., conductive carbon black (Super P)), the weight ratio between the two may be 60:40-40:60. An exemplary methods of preparation includes: dissolving/dispersing the polyacrylic acid-acrylate copolymer and the conductive agent in deionized water to form a under-coating slurry; applying the under-coating slurry to one or both sides of the positive electrode current collector (e.g., aluminum foil) and drying to obtain a positive electrode current collector with a conductive under-coating layer. In some embodiments, the thickness of the under-coating layer is 1-5 μm.

In some embodiments, the positive electrode material layer further optionally includes a binder. The type and content of the conductive agent as well as the binder are not specifically limited and can be selected according to actual needs. As an example, the binder may include at least one of polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, vinylidene fluoride-hexafluoropropylene copolymers, and fluorinated acrylate resin.

In some embodiments, the positive electrode material layer may further optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by the following method: dispersing the

positive electrode active material, the conductive agent, the binder and any other components in a solvent (e.g., N-methylpyrrolidone) to form a positive electrode slurry; coating the positive electrode slurry on the positive electrode current collector, and after drying and cold pressing, the positive electrode plate can be obtained. Optionally, the coating method is selected from lifting method, film- pulling method, electrostatic spraying method and spin coating method.

A fourth aspect of the present application provides a secondary battery including the positive electrode plate of the third aspect of the present application.

[Negative electrode plate]

In the secondary battery of the present application, the negative electrode plate may include a negative electrode current collector and a negative electrode material layer provided on the negative electrode current collector and including a negative electrode active material, the negative electrode material layer may be provided on one surface of the negative electrode current collector or on both surfaces of the negative electrode current collector.

In some embodiments, the negative electrode current collector may be a metal foil or a composite current collector. For example, as a metal foil, a copper foil may be used. The composite current collector may include a high-polymer-material base layer and a metal layer formed on at least one surface of the high-polymer-material base layer. The composite current collector can be formed by forming a metal material (copper, a copper alloy, nickel, a nickel alloy, titanium, a titanium alloy, silver and a silver alloy, etc.) on a high-polymer base material (such as a base material of polypropylene (PP), polyethylene terephthalate (PET), polybutylene terephthalate (PBT), polystyrene (PS), polyethylene (PE), etc.).

In some embodiments, the negative electrode active material may be a negative electrode active material for batteries that is well known in the art. As examples, the negative electrode active material may include at least one of the following materials: graphite (e.g., artificial graphite, natural graphite), soft carbon, hard carbon, intermediate phase carbon microspheres, carbon fibers, carbon nanotubes, silicon-based materials, tin-based materials, and lithium titanate. The silicon-based materials may be at least one selected from monolithic silicon, silicon oxide, silicon carbon complexes, silicon nitrogen complexes, and silicon alloys. The tin-based materials can be at least one selected from monolithic tin, tin-oxygen compounds and tin alloys. However, the present application is not limited to these materials, and other conventional materials that can be used as battery negative electrode active materials may also be used. These negative electrode active materials can be used alone or in combination of two or more.

In some embodiments, the negative electrode film layer further optionally includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may be at least one selected from superconducting carbon, acetylene black, carbon black, Ketjen black, carbon dots, carbon nanotubes, graphene, and carbon nanofibers.

In some embodiments, the negative electrode material layer includes the negative electrode active material of artificial graphite, the conductive agent of acetylene black, and the binder of styrene-butadiene rubber (SBR).

In some embodiments, the negative electrode material layer optionally also includes other additives, such as thickeners (e.g., sodium carboxymethyl cellulose (CMC-Na)), etc.

In some embodiments, the negative electrode plate may be prepared by: dispersing the above components for preparing a negative electrode plate, such as the negative electrode active material, the conductive agent, the binder and any other components in a solvent (e.g., deionized water) to form a negative electrode slurry; coating the negative electrode slurry on the negative electrode current collector, and after drying and cold pressing, the negative electrode plate can be obtained.

[Separator]

In the secondary battery of the present application, the separator is disposed between the positive electrode and negative electrode plates for separation. In this regard, the type of the separator is not specifically limited, and any well-known porous structure separator with good chemical stability and mechanical stability can be used. In some embodiments, the material of the separator may be at least one selected from glass fiber, nonwoven, polyethylene, polypropylene and polyvinylidene fluoride. The separator may be a single-layer membrane or a multi-layer composite membrane, without any particular limitation. Where the separator is a multi-layer composite membrane, the materials of the layers may be the same or different, with no particular limitations.

The secondary battery of the present application may be a lithium-ion battery.

The secondary battery of the present application may be prepared using conventional methods. In some embodiments, the positive electrode plate, the negative electrode plate, and the separator may be made into an electrode

assembly by a winding process or a laminating process. An exemplary preparation method includes:

Step 1: stacking a positive electrode plate, a separator and a negative electrode plate sequentially so that the separator is between the positive electrode and the negative electrode plates, and then winding to obtain the electrode assembly; and

Step 2: placing the electrode assembly in a secondary battery casing, drying and injecting with electrolyte, and then the secondary battery is made after a chemical formation and resting process.

In some embodiments, the secondary battery of the present application may include an outer packaging. The outer packaging may be used to encapsulate the above-mentioned electrode assembly and electrolyte.

In some implementations, the outer packaging of the secondary battery may be a hard casing, such as a hard plastic casing, aluminum casing, steel casing, etc. The outer packaging of the secondary battery may also be a soft pack, such as a pouch-type soft pack. The material of the soft pack may be plastic, exemplarily polypropylene, polybutylene terephthalate, and polybutylene succinate.

The shape of the secondary battery of the present application is not particularly limited, which may be cylindrical, square, or any other shape. For example, FIG. 6 shows as an example a secondary battery 5 with a square structure.

In some embodiments, referring to FIG. 7, the outer packaging may include a casing 51 and a cover 53. wherein the casing 51 may include a bottom plate and side plates connected to the bottom plate, the bottom plate and the side plates enclosing a receiving cavity. The casing 51 has an opening connected to the receiving cavity, and the cover 53 can be provided over the opening to close the receiving cavity. The positive electrode plate, the negative electrode plate, and the separator may be wound or laminated to form an electrode assembly 52, which is encapsulated in the receiving cavity. An electrolyte is infiltrated into the electrode assembly 52. The number of electrode assemblies 52 contained in the secondary battery 5 may be one or more, which may be selected by a person skilled in the art according to specific practical needs.

In some embodiments, the secondary battery can be assembled into a battery module, and the number of secondary batteries contained in the battery module can be one or more, with the specific number being selected by those skilled in the art based on the application and capacity of the battery module.

FIG. 4 shows, as an example, a battery module 4. Referring to FIG. 4, in the battery module 4, a plurality of secondary batteries 5 may be arranged sequentially along a length of the battery module 4. Of course, they can also be arranged in any other way. Further, the plurality of secondary batteries 5 may be secured by fasteners.

Optionally, the battery module 4 may also include a housing having an accommodating space in which a plurality of secondary batteries 5 are accommodated.

In some embodiments, the above battery modules may also be assembled into a battery pack, and the number of battery modules contained in the battery pack can be one or more, the specific number of which can be selected by a person skilled in the art according to the application and capacity of the battery pack.

FIGS. 5 and 6 show, as an example, a battery pack 1. Referring to FIGS. 5 and 6, the battery pack 1 may include a battery container and a plurality of battery modules 4 disposed in the battery container. the battery container includes an upper container body 2 and a lower container body 3, and the upper container body 2 is able to be covered by the lower container body 3 and form an enclosed space for accommodating the battery modules 4. A plurality of battery modules 4 can be arranged in the battery container in any manner.

Further, the present application provides an electric device, and the power- consumption device includes the secondary battery, the battery module, or the battery pack provided in the present application. The secondary battery, the battery module, or the battery pack may be used as a power source for the power- consumption device or may be used as an energy storage unit for the electric device. The power- consumption device may be selected from, but not limited to, mobile devices (e.g., cell phones, laptops, etc.), electric vehicles (e.g., pure electric vehicles, hybrid electric vehicles, plug-in hybrid electric vehicles, electric bicycles, electric scooters, electric golf carts, electric trucks, etc.), electric trains, ships and satellites, energy storage systems, etc. As a power- consumption device, the secondary battery, the battery module or the battery pack may be selected according to application needs.

FIG. 7 shows as an exemplary power- consumption device. The power- consumption device is a pure electric vehicle, a hybrid electric vehicle, or a plug-in hybrid electric vehicle, etc. To meet the high power and high energy density requirements of the secondary battery for this power- consumption device, a battery pack or battery module may be used.

As another example the device may be a cell phone, tablet, laptop, etc. The device usually requires thinness and lightness and may employ a secondary battery as a power source.

## Examples

Hereinafter, examples of the present application are described. The examples described below are exemplary

and are intended to explain the present application only and are not to be construed as limiting the present application. Where specific techniques or conditions are not indicated in the examples, the techniques or conditions described in the literature in the art or in accordance with the product specification are followed. Where the reagents or instruments used are not specified as manufacturers, they are conventional products that can be obtained commercially.

Preparation of a secondary battery

Example 1

Preparation of positive electrode active material

Preparation of doped manganese oxalate: 1.3 mol of $MnSO_4 \cdot H_2O$ and 0.7 mol of $FeSO_4 \cdot H_2O$ were mixed thoroughly in a mixer for 6 hours, the mixture was transferred to a reactor, and 10 L of deionized water and 2 mol of oxalic acid dihydrate (as oxalic acid) were added; the reactor was heated to 80°C and stirred at 600 rpm for 6 hours, the reaction was terminated (no bubbles were generated) to obtain a Fe-doped manganese oxalate suspension; then the suspension was filtered and the filter cake was dried at 120°C, after which it was ground to obtain Fe-doped manganese oxalate particles with a median particle size $Dv_{50}$ of about 100 nm.

Preparation of doped lithium manganese phosphate: 1 mol of the above manganese oxalate particles, 0.497 mol of lithium carbonate, 0.001 mol of $Mo(SO_4)_3$, an aqueous phosphoric acid solution containing 0.999 mol of phosphoric acid at a concentration of 85%, 0.001 mol of $H_4SiO_4$, 0.0005 mol of $NH_4HF_2$, and 0.005 mol of sucrose were added to 20 L of deionized water; the mixture was transferred to a sand mill and well ground and stirred for 10 hours to obtain a slurry; the slurry was transferred to a spray-drying equipment for spray-drying granulation at a drying temperature of 250°C for 4 hours to obtain granules; the above powder was sintered at 700°C for 10 hours in a protective atmosphere of nitrogen (90 vol%) + hydrogen (10 vol%) to obtain a carbon-coated $Li_{0.994}Mo_{0.001}Mn_{0.65}Fe_{0.35}P_{0.999}Si_{0.001}O_{3.999}F_{0.001}$; the positive electrode active material can be detected by inductively coupled plasma emission spectroscopy (ICP) for elemental content.

2) Preparation of button battery

The above positive electrode active material, polyvinylidene fluoride (PVDF) and acetylene black were added to N-methylpyrrolidone (NMP) in a weight ratio of 90:5:5 and stirred in a drying room to make a slurry; the above slurry was coated on an aluminum foil, dried and cold pressed to form a positive electrode plate; the coating amount was 0.02 g/cm$^2$, and the compaction density was 2.0 g/cm$^3$.

A lithium plate was used as the negative electrode, and a solution of 1 mol/L $LiPF_6$ in ethylene carbonate (EC), diethyl carbonate (DEC) and dimethyl carbonate (DMC) at a volume ratio of 1:1:1 was used as the electrolyte, and was assembled with the above-mentioned positive electrode plate into a button battery container to form a button battery (also referred to hereinafter as "button cell").

3) Preparation of full battery

The above positive electrode active material was mixed with the conductive agent of acetylene black and the binder of polyvinylidene fluoride (PVDF) in the N-methylpyrrolidone solvent system in the weight ratio of 92:2.5:5.5, and then coated on an aluminum foil and dried and cold pressed to obtain the positive electrode plate. The coating amount was 0.04 g/cm$^2$, and the compaction density was 2.4 g/cm$^3$.

The negative electrode active material of artificial graphite, hard carbon, conductive agent acetylene black, binder butadiene rubber (SBR), and the thickener of sodium carboxymethyl cellulose (CMC) were mixed well in deionized water in the weight ratio of 90:5:2:2:1, and then coated on a copper foil and dried and cold pressed to obtain the negative electrode plate. The coating amount was 0.02 g/cm$^2$, and the compaction density was 1.7 g/cm$^3$.

Polyethylene (PE) porous polymer film was used as the separator , and the positive electrode plate, the separator , and the negative electrode plate were stacked in order, so that the separator was positioned between the positive electrode and negative electrode plate for separation, and a bare battery was obtained by winding. The bare battery was placed in an outer packaging, filled with the same electrolyte as the above-mentioned preparation of the button cell and encapsulated to obtain the full battery (also referred to as "full cell" below).

Example 2

Except that in "1) Preparation of positive electrode active material", the amount of high-purity $Li_2CO_3$ was changed to 0.4885 mol, $Mo(SO_4)_3$ was replaced with $MgSO_4$, the amount of $FeSO_4 \cdot H_2O$ was changed to 0.68 mol, 0.02

mol of $Ti(SO_4)_2$ was added in the preparation of doped manganese oxalate, and $H_4SiO_4$ was replaced with $HNO_3$, other conditions were the same as in Example 1.

Example 3

Except that in "1) Preparation of positive electrode active material", the amount of high-purity $Li_2CO_3$ was changed to 0.496 mol, $Mo(SO_4)_3$ was replaced with $W(SO_4)_3$, and $H_4SiO_4$ was replaced with $H_2SO_4$, other conditions were the same as in Example 1.

Example 4

Except that in "1) Preparation of positive electrode active material", the amount of high-purity $Li_2CO_3$ was changed to 0.4985 mol, 0.001 mol of $Mo(SO_4)_3$ was replaced with 0.0005 mol of $Al_2(SO_4)_3$, and $NH_4HF_2$ was replaced with $NH_4HCl_2$, other conditions were the same as in Example 1.

Example 5

Except that in "1) Preparation of positive electrode active material", 0.7 mol of $FeSO_4 \cdot H_2O$ was changed to 0.69 mol, 0.01 mol of $VCl_2$ was additionally added in the preparation of the doped manganese oxalate, the amount of $Li_2CO_3$ was changed to 0.4965 mol, and 0.001 mol of $Mo(SO_4)_3$ was replaced with 0.0005 mol of $Nb_2(SO_4)_5$, and $H_4SiO_4$ was replaced with $H_2SO_4$, other conditions were the same as in Example 1.

Example 6

Except that in "1) Preparation of positive electrode active material", the amount of $FeSO_4 \cdot H_2O$ was changed to 0.68 mol, 0.01 mol of $VCl_2$ and 0.01 mol of $MgSO_4$ were additionally added in the preparation of the doped manganese oxalate, the amount of $Li_2CO_3$ was changed to 0.4965 mol, 0.001 mol of $Mo(SO_4)_3$ was replaced with 0.0005 mol of $Nb_2(SO_4)_5$, and $H_4SiO_4$ was replaced with $H_2SO_4$, other conditions were the same as in Example 1.

Example 7

Except that in " 1) Preparation of positive electrode active material", $MgSO_4$ was replaced with $CoSO_4$, other conditions were the same as in Example 6.

Example 8

Except that in " 1) Preparation of positive electrode active material", $MgSO_4$ was replaced with $NiSO_4$, other conditions were the same as in Example 6.

Example 9

Except that in "1) Preparation of positive electrode active material", the amount of $FeSO_4 \cdot H_2O$ was changed to 0.698 mol, 0.002 mol of $Ti(SO_4)_2$ was additionally added in the preparation of the doped manganese oxalate, the amount of $Li_2CO_3$ was changed to 0.4955 mol, 0.001 mol of $Mo(SO_4)_3$ was replaced with 0.0005 mol of $Nb_2(SO_4)_5$, $H_4SiO_4$ was replaced with $H_2SO_4$, and $NH_4HF_2$ was replaced with $NH_4HCl_2$, other conditions were the same as in Example 1.

Example 10

Except that in "1) Preparation of positive electrode active material", the amount of $FeSO_4 \cdot H_2O$ was changed to 0.68 mol, 0.01 mol of $VCl_2$ and 0.01 mol of $MgSO_4$ were added in the preparation of the doped manganese oxalate, the amount of $Li_2CO_3$ was changed to 0.4975 mol, and 0.001 mol $Mo(SO_4)_3$ was replaced with 0.0005 mol of $Nb_2(SO_4)_5$, and $NH_4HF_2$ was replaced with $NH_4HBr_2$, other conditions were the same as in Example 1.

Example 11

Except that in "1) Preparation of positive electrode active material", the amount of $FeSO_4 \cdot H_2O$ was changed to 0.69 mol, 0.01 mol of $VCl_2$ was added in the preparation of the doped manganese oxalate, the amount of $Li_2CO_3$ was

changed to 0.499 mol, $Mo(SO_4)_3$ was replaced with $MgSO_4$, and $NH_4HF_2$ was replaced with $NH_4HBr_2$, other conditions were the same as in Example 1.

Example 12

Except that in "1) Preparation of positive electrode active material", the amount of $MnSO_4 \cdot H_2O$ was changed to 1.36 mol, the amount of $FeSO_4 \cdot H_2O$ was changed to 0.6 mol, 0.04 mol of $VCl_2$ was added in the preparation of doped manganese oxalate, the amount of $Li_2CO_3$ was changed to 0.4985 mol, the amount of $Mo(SO_4)_3$ was replaced with $MgSO_4$, and $H_4SiO_4$ was replaced with $HNO_3$, other conditions were the same as in Example 1.

Example 13

Except that in "1) Preparation of positive electrode active material", the amount of $MnSO_4 \cdot H_2O$ was changed to 1.16 mol, and the amount of $FeSO_4 \cdot H_2O$ was changed to 0.8 mol, other conditions were the same as in Example 12.

Example 14

Except that in "1) Preparation of positive electrode active material", the amount of $MnSO_4 \cdot H_2O$ was changed to 1.3 mol, and the amount of $VCl_2$ was changed to 0.1 mol, other conditions were the same as in Example 12.

Example 15

Except that in "1) Preparation of positive electrode active material", the amount of $MnSO_4 \cdot H_2O$ was changed to 1.2 mol, 0.1 mol of $VCl_2$ was added in the preparation of doped manganese oxalate, the amount of $Li_2CO_3$ was changed to 0.494 mol, 0.001 mol of $Mo(SO_4)_3$ was replaced with 0.005 mol of $MgSO_4$, and $H_4SiO_4$ was replaced with $H_2SO_4$, other conditions were the same as in Example 1.

Example 16

Except that in "1) Preparation of positive electrode active material", the amount of $MnSO_4 \cdot H_2O$ was changed to 1.2 mol, 0.1 mol of $VCl_2$ was added in the preparation of doped manganese oxalate, the amount of $Li_2CO_3$ was changed to 0.467 mol, 0.001 mol of $Mo(SO_4)_3$ was replaced with 0.005 mol of $MgSO_4$, 0.001 mol of $H_4SiO_4$ was replaced with 0.005 mol of $H_2SO_4$, and 1.175 mol of 85% phosphoric acid was replaced with 1.171 mol of 85% phosphoric acid, other conditions were the same as in Example 1.

Example 17

Except that in "1) Preparation of positive electrode active material", the amount of $MnSO_4 \cdot H_2O$ was changed to 1.2 mol, 0.1 mol of $VCl_2$ was added in the preparation of doped manganese oxalate, the amount of $Li_2CO_3$ was changed to 0.492 mol, 0.001 mol of $Mo(SO_4)_3$ was replaced with 0.005 mol of $MgSO_4$, $H_4SiO_4$ was replaced with $H_2SO_4$, and 0.0005 mol of $NH_4HF_2$ was changed to 0.0025 mol, other conditions were the same as in Example 1.

Example 18

Except that in "1) Preparation of positive electrode active material", the amount of $FeSO_4 \cdot H_2O$ was changed to 0.5 mol, 0.1 mol of $VCl_2$ and 0.1 mol of $CoSO_4$ were added in the preparation of doped manganese oxalate, the amount of $Li_2CO_3$ was changed to 0.492 mol, 0.001 mol of $Mo(SO_4)_3$ was replaced with 0.005 mol of $MgSO_4$, $H_4SiO_4$ was replaced with $H_2SO_4$, and 0.0005 mol of $NH_4HF_2$ was changed to 0.0025 mol, other conditions were the same as in Example 1.

Example 19

Except that in " 1) Preparation of positive electrode active material", the amount of $FeSO_4 \cdot H_2O$ was changed to 0.4 mol, and 0.1 mol of $CoSO_4$ was changed to 0.2 mol, other conditions were the same as in Example 18.

Example 20

Except that in "1) Preparation of positive electrode active material", the amount of $MnSO_4 \cdot H_2O$ was changed

to 1.5 mol, the amount of $FeSO_4 \cdot H_2O$ was changed to 0.1 mol, and the amount of $CoSO_4$ was changed to 0.3 mol, other conditions were the same as in Example 18.

Example 21

Except that in "1) Preparation of positive electrode active material", 0.1 mol of $CoSO_4$ was replaced with 0.1 mol of $NiSO_4$, other conditions were the same as in Example 18.

Example 22

Except that in "1) Preparation of positive electrode active material", the amount of $MnSO_4 \cdot H_2O$ was changed to 1.5 mol, the amount of $FeSO_4 \cdot H_2O$ was changed to 0.2 mol, and 0.1 mol of $CoSO_4$ was replaced with 0.2 mol of $NiSO_4$, other conditions were the same as in Example 18.

Example 23

Except that in "1) Preparation of positive electrode active material", the amount of $MnSO_4 \cdot H_2O$ was changed to 1.4 mol, the amount of $FeSO_4 \cdot H_2O$ was changed to 0.3 mol, and the amount of $CoSO_4$ was changed to 0.2 mol, other conditions were the same as in Example 18.

Example 24

Except that in "1) Preparation of positive electrode active material", 1.3 mol of $MnSO_4 \cdot H_2O$ was changed to 1.2 mol, 0.7 mol of $FeSO_4 \cdot H_2O$ was changed to 0.5 mol, 0.1 mol of $VCl_2$ and 0.2 mol of $CoSO_4$ were added in the preparation of doped manganese oxalate, the amount of $Li_2CO_3$ was changed to 0.497 mol, 0.001 mol of $Mo(SO_4)_3$ was replaced with 0.005 mol of $MgSO_4$, $H_4SiO_4$ was replaced with $H_2SO_4$, and 0.0005 mol of $NH_4HF_2$ was changed to 0.0025 mol, other conditions were the same as in Example 1.

Example 25

Except that in "1) Preparation of positive electrode active material", the amount of $MnSO_4 \cdot H_2O$ was changed to 1.0 mol, the amount of $FeSO_4 \cdot H_2O$ was changed to 0.7 mol, and the amount of $CoSO_4$ was changed to 0.2 mol, other conditions were the same as in Example 18.

Example 26

Except that in "1) Preparation of positive electrode active material", the amount of $MnSO_4 \cdot H_2O$ was changed to 1.4 mol, the amount of $FeSO_4 \cdot H_2O$ was changed to 0.3 mol, 0.1 mol of $VCl_2$ and 0.2 mol of $CoSO_4$ were added in the preparation of doped manganese oxalate, the amount of $Li_2CO_3$ was changed to 0.4825 mol, 0.001 mol of $Mo(SO_4)_3$ was replaced with 0.005 mol of $MgSO_4$, the amount of $H_4SiO_4$ was changed to 0.1 mol, the amount of phosphoric acid was changed to 0.9 mol, and the amount of $NH_4HF_2$ was changed to 0.04 mol, other conditions were the same as in Example 1.

Example 27

Except that in "1) Preparation of positive electrode active material", the amount of $MnSO_4 \cdot H_2O$ was changed to 1.4 mol, the amount of $FeSO_4 \cdot H_2O$ was changed to 0.3 mol, 0.1 mol of $VCl_2$ and 0.2 mol of $CoSO_4$ were added in the preparation of doped manganese oxalate, the amount of $Li_2CO_3$ was changed to 0.485 mol, 0.001 mol of $Mo(SO_4)_3$ was replaced with 0.005 mol of $MgSO_4$, the amount of $H_4SiO_4$ was changed to 0.08 mol, the amount of phosphoric acid was changed to 0.92 mol, and the amount of $NH_4HF_2$ was changed to 0.05 mol, other conditions were the same as in Example 1.

Comparative Example 1

Preparation of manganese oxalate: 1 mol of $MnSO_4 \cdot H_2O$ was added to the reactor, and 10 L of deionized water and 1 mol of oxalic acid dihydrate (as oxalic acid) were added. The reactor was heated to 80°C and stirred at 600 rpm for 6 hours; the reaction was terminated (no bubbles were generated) to obtain a manganese oxalate suspension. Then the suspension was filtered and the filter cake was dried at 120°C, after which it was ground to obtain manganese oxalate

particles with median particle size $Dv_{50}$ of 50-200 nm.

Preparation of lithium manganese phosphate: 1 mol of the above manganese oxalate particles, 0.5 mol of lithium carbonate, an aqueous phosphoric acid solution containing 1 mol of phosphoric acid at a concentration of 85%, and 0.005 mol of sucrose were added into 20 L of deionized water. The mixture was transferred to a sand mill and fully ground and stirred for 10 hours to obtain a slurry. the slurry was transferred to a spray drying equipment for spray drying granulation at a drying temperature of 250° C for 4 hours to obtain granules. The above powder was sintered at 700°C for 10 hours in a protective atmosphere of nitrogen (90 vol%) + hydrogen (10 vol%) to obtain a carbon-coated $LiMnPO_4$.

Comparative Example 2

Except that in Comparative Example 1, 1 mol of $MnSO_4 \cdot H_2O$ was replaced with 0.85 mol of $MnSO_4 \cdot H_2O$ and 0.15 mol of $FeSO_4 \cdot H_2O$, and added to a mixer and mixed thoroughly for 6 hours before adding to the reactor, other conditions were the same as in Comparative Example 1.

Comparative Example 3

Except that in " 1) Preparation of positive electrode active material", the amount of $MnSO_4 \cdot H_2O$ was changed to 1.9 mol, 0.7 mol of $FeSO_4 \cdot H_2O$ was replaced by 0.1 mol of $ZnSO_4$, the amount of $Li_2CO_3$ was changed to 0.495 mol, 0.001 mol of $Mo(SO_4)_3$ was replaced with 0.005 mol of $MgSO_4$, the amount of phosphoric acid was changed to 1 mol, and no $H_4SiO_4$ and $NH_4HF_2$ were added, other conditions were the same as in Example 1.

Comparative Example 4

Except in "1) Preparation of positive electrode active material", the amount of $MnSO_4 \cdot H_2O$ was changed to 1.2 mol, the amount of $FeSO_4 \cdot H_2O$ was changed to 0.8 mol, the amount of $Li_2CO_3$ was changed to 0.45 mol, 0.001 mol of $Mo(SO_4)_3$ was replaced with 0.005 mol of $Nb_2(SO_4)_5$, 0.999 mol of phosphoric acid was changed to 1 mol, 0.0005 mol of $NH_4HF_2$ was changed to 0.025 mol, and no $H_4SiO_4$ was added, other conditions were the same as in Example 1.

Comparative Example 5

Except that in " 1) Preparation of positive electrode active material", the amount of $MnSO_4 \cdot H_2O$ was changed to 1.4 mol, the amount of $FeSO_4 \cdot H_2O$ was changed to 0.6 mol, the amount of $Li_2CO_3$ was changed to 0.38 mol, and 0.001 mol of $Mo(SO_4)_3$ was replaced with 0.12 mol of $MgSO_4$. other conditions were the same as in Example 1.

Comparative Example 6

Except that in "1) Preparation of positive electrode active material", the amount of $MnSO_4 \cdot H_2O$ was changed to 0.8 mol, 0.7 mol of $FeSO_4 \cdot H_2O$ was replaced with 1.2 mol of $ZnSO_4$, the amount of $Li_2CO_3$ was changed to 0.499 mol, and 0.001 mol of $Mo(SO_4)_3$ was replaced with 0.001 mol of $MgSO_4$, other conditions were the same as in Example 1.

Comparative Example 7

Except in "1) Preparation of positive electrode active material", the amount of $MnSO_4 \cdot H_2O$ was changed to 1.4 mol, the amount of $FeSO_4 \cdot H_2O$ was changed to 0.6 mol, the amount of $Li_2CO_3$ was changed to 0.534 mol, 0.001 mol of $Mo(SO_4)_3$ was replaced with 0.001 mol of $MgSO_4$, and the amount of phosphoric acid was changed to 0.88 mol, the amount of $H_4SiO_4$ was changed to 0.12 mol, and the amount of $NH_4HF_2$ was changed to 0.025 mol, other conditions were the same as in Example 1.

Comparative Example 8

Except in "1) Preparation of positive electrode active material", the amount of $MnSO_4 \cdot H_2O$ was changed to 1.2 mol, the amount of $FeSO_4 \cdot H_2O$ was changed to 0.8 mol, the amount of $Li_2CO_3$ was changed to 0.474 mol, 0.001 mol of $Mo(SO_4)_3$ was replaced with 0.001 mol of $MgSO_4$, and the amount of phosphoric acid was changed to 0.93 mol, the amount of $H_4SiO_4$ was changed to 0.07 mol, and the amount of $NH_4HF_2$ was changed to 0.06 mol, other conditions were the same as in Example 1.

Test methods for positive electrode active material properties and battery performance

Measurement of lattice change rate

The samples of positive electrode active material were placed in XRD (model type: Bruker D8 Discover) at a constant temperature of 25°C and were tested at 1°/minute, and the test data were compiled and analyzed, and the lattice constants a0, b0, c0 and v0 were calculated at this time with reference to standard PDF cards (a0, b0 and c0 indicate the length on each aspect of the unit cell, and v0 indicates the unit cell volume, which can be directly obtained by XRD refinement results).

Using the method of preparing button battery in the above-mentioned examples, the samples of positive electrode active material were prepared into button batteries, and the button batteries were charged at a small rate of 0.05 C until the current was reduced to 0.01 C. Then the positive electrode plates in the button batteries were removed and soaked in DMC for 8 hours, and were dried and scraped to obtain powder, and particles with particle size less than 500nm were screened out. Samples were taken and their lattice constants v1 were calculated in the same manner as the fresh samples tested above, and $(v0-v1)/v0\times100\%$ as their lattice change rates before and after complete lithium deintercalation and intercalation were shown in the table.

2. Measurement of Li/Mn antisite-defects concentration

The XRD results from the "Measurement of lattice change rate" were compared with the PDF (Powder Diffraction File) card of the standard crystal to obtain the Li/Mn anti site-defects concentration. Specifically, the XRD results from the "Measurement of lattice change rate" were imported into the General Structural Analysis System (GSAS) software, and the refinement results, which contain the occupancy of different atoms, were automatically obtained, and the Li/Mn antisite-defects concentrations were obtained by reading the refinement results.

3. Measurement of surface oxygen valence

5g of a positive electrode active material sample was taken and prepared into a button battery according to the preparation method for the button battery described in the above examples. The button battery was charged at a small rate of 0.05 C until the current was reduced to 0.01 C. Then the positive electrode plate was removed from the button battery and soaked in DMC for 8 hours, and was dried, scraped to obtain powder, and the particles with particle size less than 500 nm were screened out. The resulting particles were measured by electron energy loss spectroscopy (EELS, the model type of instrument used was Talos F200S) to obtain the energy loss near edge structure (ELNES), which reflected the density of states and energy level distribution of the elements. Based on the density of states and energy level distribution, the number of occupied electrons was calculated by integrating the valence band density of states data to derive the valence state of the surface oxygen after charging.

4. Measurement of compaction density

5g of powder was placed in a special mold for compaction (CARVER mold, model type of 13mm), then the mold was placed on a compaction density apparatus. A pressure of 3 T was applied, the thickness of the powder under pressure was read on the apparatus (the thickness after unloading), and the compaction density was calculated by $\rho=m/v$.

5. Measurement of Mn (and Mn site-doping Fe) exsolution after cycling

The full cells cycled at 45°C until the capacity decayed to 80% were discharged to a cutoff voltage of 2.0 V at a rate of 0.1 C. The cells were then disassembled, the negative electrode plates were removed, and 30 discs per unit area (1540.25 $mm^2$) were randomly taken from the negative electrode plate and tested by inductively coupled plasma emission spectroscopy (ICP) using an Agilent ICP-OES730. The amount of Fe (if the Mn site of the positive electrode active material was doped with Fe) and Mn were calculated from the ICP results, and thus the exsolution amount of Mn (and Mn site-doping Fe) after the cycles were calculated. The test standard was based on EPA-6010D-2014.

6. Measurement of initial gram capacity of the button cells

At 2.5-4.3V, the button cells were charged to 4.3V at 0.1 C, then charged at constant voltage at 4.3V until the current was less than or equal to 0.05 mA, left for 5 minutes, then discharged to 2.0 V at 0.1C, at which time the discharged capacity was the initial gram capacity, and was recorded as D0.

7. Measurement of 3C charging constant current ratio

At a constant temperature of 25°C, the fresh full batteries were left for 5 minutes, discharged to 2.5 V at 1/3C, left for 5 minutes, charged to 4.3 V at 1/3C, and then charged at a constant voltage of 4.3 V until the current was less than or equal to 0.05 mA and left for 5 minutes, the charging capacity recorded as C0, discharged to 2.5 V at 1/3C and left for 5 minutes, and then charged to 4.3 V at 3C and left for 5 minutes, the charging capacity recorded as C1. The constant current ratio of 3C charging was C1/C0×100%.

The higher the 3C charging constant current ratio, the better the battery's rate performance.

8. Full battery cycle performance test at 45°C

The full batteries were charged to 4.3 V at a constant temperature of 45°C, at 2.5-4.3V, and then charged at constant voltage at 4.3 V until the current was less than or equal to 0.05 mA and left for 5 minutes, then discharged to 2.5 V at 1 C, the discharge capacity recorded as D0. The charge/discharge cycle was repeated until the discharge capacity was reduced to 80% of D0. The number of cycles the batteries had undergone at this point was recorded (referred to as "45°C cycle number").

9. Full battery expansion test at 60°C

The full batteries were stored under the 100% state of charge (SOC) at 60°C. The open circuit voltage (OCV) and AC internal impedance (IMP) of the batteries were measured before, during and after storage to monitor the SOC, and the volume of the batteries was measured. In which the full batteries were removed after every 48 hours of storage, the open circuit voltage (OCV) and internal impedance (IMP) were tested after standing for 1 h, and the battery volume was measured by the water displacement method after cooling to room temperature. The water displacement method that is, first the gravity $F_1$ of a battery was measured using a balance that automatically performs unit conversion on the dial data, then the battery was completely immersed in deionized water (density was known to be 1 g/cm$^3$), the gravity $F_2$ of the battery at this point was measured, the buoyancy $F_{buoyancy}$ of the battery was thus $F_1 - F_2$, and then according to Archimedes' principle $F_{buoyancy} = \rho \times g \times V_{displaced}$, the battery volume $V = (F_1 - F_2)/(\rho \times g)$.

From the OCV and IMP test results, the batteries in the examples always maintained more than 99% SOC during this experiment until the end of storage.

After 30 days of storage, the volume of the batteries was measured and the percentage increase in volume of the batteries after storage was calculated relative to the volume of the batteries before storage.

In addition, the residual capacity of the batteries was measured. At 2.5-4.3 V, the full batteries were charged to 4.3 V at 1 C, then charged at the constant voltage at 4.3 V until the current was less than or equal to 0.05 mA and were left for 5 minutes, and the charging capacity at this point was recorded as the residual capacity of the batteries.

The positive electrode active material compositions in Examples 1-11 and Comparative Examples 1-8 are shown in Table 1. The performance data of the positive electrode active materials or button cells or full cells in Examples 1-11 and Comparative Examples 1-8 measured according to the performance test methods described above are shown in Table 2. The positive electrode active material compositions in Examples 12-27 are shown in Table 3. The performance data of the positive electrode active materials or button cells or full cells in Examples 12-27 measured according to the performance test methods described above are shown in Table 4.

Table 1 The positive electrode active material compositions in Examples 1-11 and Comparative Examples 1-8.

| | Positive electrode active material |
|---|---|
| Comparative Example 1 | $LiMnPO_4$ |
| Comparative Example 2 | $LiMn_{0.85}Fe_{0.15}PO_4$ |
| Comparative Example 3 | $Li_{0.990}Mg_{0.005}Mn_{0.95}Zn_{0.05}PO_4$ |
| Comparative Example 4 | $Li_{0.90}Nb_{0.01}Mn_{0.6}Fe_{0.4}PO_{3.95}F_{0.05}$ |
| Comparative Example 5 | $Li_{0.76}Mg_{0.12}Mn_{0.7}Fe_{0.3}P_{0.999}Si_{0.001}O_{3.999}F_{0.001}$ |
| Comparative Example 6 | $Li_{0.998}Mg_{0.001}Mn_{0.4}Zn_{0.6}P_{0.999}Si_{0.001}O_{3.999}F_{0.001}$ |
| Comparative Example 7 | $Li_{1.068}Mg_{0.001}Mn_{0.7}Fe_{0.3}P_{0.88}Si_{0.12}O_{3.95}F_{0.05}$ |
| Comparative Example 8 | $Li_{0.948}Mg_{0.001}Mn_{0.6}Fe_{0.4}P_{0.93}Si_{0.07}O_{3.88}F_{0.12}$ |

(continued)

| | Positive electrode active material |
|---|---|
| Example 1 | $Li_{0.994}Mo_{0.001}Mn_{0.65}Fe_{0.35}P_{0.999}Si_{0.001}O_{3.999}F_{0.001}$ |
| Example 2 | $Li_{0.977}Mg_{0.001}Mn_{0.65}Fe_{0.34}Ti_{0.01}P_{0.999}N_{0.001}O_{3.999}F_{0.001}$ |
| Example 3 | $Li_{0.992}W_{0.001}Mn_{0.65}Fe_{0.35}P_{0.999}S_{0.001}O_{3.999}F_{0.001}$ |
| Example 4 | $Li_{0.997}Al_{0.001}Mn_{0.65}Fe_{0.35}P_{0.999}Si_{0.001}O_{3.999}Cl_{0.001}$ |
| Example 5 | $Li_{0.993}Nb_{0.001}Mn_{0.65}Fe_{0.345}V_{0.005}P_{0.999}S_{0.001}O_{3.999}F_{0.001}$ |
| Example 6 | $Li_{0.993}Nb_{0.001}Mn_{0.65}Fe_{0.34}V_{0.005}Mg_{0.005}P_{0.999}S_{0.001}O_{3.999}F_{0.001}$ |
| Example 7 | $Li_{0.993}Nb_{0.001}Mn_{0.65}Fe_{0.34}V_{0.005}Co_{0.005}P_{0.999}S_{0.001}O_{3.999}F_{0.001}$ |
| Example 8 | $Li_{0.993}Nb_{0.001}Mn_{0.65}Fe_{0.34}V_{0.005}Ni_{0.005}P_{0.999}S_{0.001}O_{3\cdot999}F_{0.001}$ |
| Example 9 | $Li_{0.991}Nb_{0.001}Mn_{0.65}Fe_{0.349}Ti_{0.001}P_{0.999}S_{0.001}O_{3.999}Cl_{0.001}$ |
| Example 10 | $Li_{0.995}Nb_{0.001}Mn_{0.65}Fe_{0.34}V_{0.005}Mg_{0.005}P_{0.999}Si_{0.001}O_{3.999}Br_{0.001}$ |
| Example 11 | $Li_{0.998}Mg_{0.001}Mn_{0.65}Fe_{0.345}V_{0.005}P_{0.999}Si_{0.001}O_{3.999}Br_{0.001}$ |

Table 2 Performance data of the positive electrode active materials or button cells or full cells in Examples 1-11 and Comparative Examples 1-8 measured according to the performance test methods described above.

| | Lattice change rate (%) | Li/Mn anti site-defects concentration (%) | Surface oxygen valence state | Compaction density ($g/cm^3$) | Amount of Mn and Fe exsolved after cycling (ppm) | Button cell initial gram capacity (mAh/g) | 3C charging constant current ratio (%) | Number of cycles at 45°C | Battery expansion rate store at 60°C (%) |
|---|---|---|---|---|---|---|---|---|---|
| Comparative Example 1 | 11.4 | 5.2 | -1.55 | 1.7 | 2060 | 125.6 | 50.1 | 121 | 48.6 |
| Comparative Example 2 | 10.6 | 4.3 | -1.51 | 1.87 | 1510 | 126.4 | 50.4 | 129 | 37.3 |
| Comparative Example 3 | 10.8 | 3.6 | -1.64 | 1.88 | 1028 | 134.7 | 51.7 | 134 | 31.9 |
| Comparative Example 4 | 9.7 | 2.4 | -1.71 | 1.93 | 980 | 141.3 | 62.3 | 148 | 30.8 |
| Comparative Example 5 | 5.6 | 1.8 | -1.81 | 1.98 | 873 | 110.8 | 50.2 | 387 | 21.4 |
| Comparative Example 6 | 3.7 | 1.5 | -1.80 | 2.01 | 574 | 74.3 | 65.8 | 469 | 15.8 |
| Comparative Example 7 | 7.8 | 1.5 | -1.75 | 2.05 | 447 | 139.4 | 64.3 | 396 | 18.3 |
| Comparative Example 8 | 8.4 | 1.4 | -1.79 | 2.16 | 263 | 141.7 | 63.9 | 407 | 22.7 |
| Example 1 | 6.3 | 1.2 | -1.82 | 2.21 | 192 | 156.2 | 68.1 | 552 | 8.4 |
| Example 2 | 6.8 | 1.1 | -1.85 | 2.25 | 161 | 153.4 | 75.1 | 583 | 7.5 |
| Example 3 | 6.4 | 0.9 | -1.86 | 2.31 | 144 | 154.6 | 76.7 | 646 | 8.6 |
| Example 4 | 5.5 | 0.9 | -1.89 | 2.38 | 125 | 153.6 | 78.4 | 638 | 8.3 |
| Example 5 | 5.3 | 0.7 | -1.98 | 2.45 | 102 | 153.8 | 84.5 | 769 | 7.8 |
| Example 6 | 2.4 | 0.7 | -1.95 | 2.47 | 88 | 157.5 | 92.5 | 747 | 6.4 |
| Example 7 | 2.2 | 0.6 | -1.96 | 2.49 | 85 | 158.5 | 94.8 | 858 | 6.3 |
| Example 8 | 3.4 | 0.5 | -1.98 | 2.51 | 79 | 157.6 | 93.8 | 726 | 6.2 |
| Example 9 | 3.8 | 0.5 | -1.96 | 2.45 | 86 | 146.8 | 90.3 | 686 | 6.8 |

(continued)

| | Lattice change rate (%) | Li/Mn anti site-defects concentration (%) | Surface oxygen valence state | Compaction density (g/cm$^3$) | Amount of Mn and Fe exsolved after cycling (ppm) | Button cell initial gram capacity (mAh/g) | 3C charging constant current ratio (%) | Number of cycles at 45°C | Battery expansion rate store at 60°C (%) |
|---|---|---|---|---|---|---|---|---|---|
| Example 10 | 4.0 | 0.6 | -1.97 | 2.46 | 103 | 155.7 | 91.2 | 638 | 6.5 |
| Example 11 | 3.6 | 0.7 | -1.95 | 2.46 | 112 | 155.8 | 92.6 | 587 | 6.4 |

Table 3 The positive electrode active material compositions in Examples 12-27.

| | Positive electrode active material | (1-y):y | a:x |
|---|---|---|---|
| Example 12 | $Li_{0.997}Mg_{0.001}Mn_{0.68}Fe_{0.3}V_{0.02}P_{0.999}N_{0.001}O_{3.999}F_{0.001}$ | 2.13 | 997 |
| Example 13 | $Li_{0.997}Mg_{0.001}Mn_{0.58}Fe_{0.4}V_{0.02}P_{0.999}N_{0.001}O_{3.999}F_{0.001}$ | 1.38 | 997 |
| Example 14 | $Li_{0.997}Mg_{0.001}Mn_{0.65}Fe_{0.3}V_{0.05}P_{0.999}N_{0.001}O_{3.999}F_{0.001}$ | 1.86 | 997 |
| Example 15 | $Li_{0.988}Mg_{0.005}Mn_{0.6}Fe_{0.35}V_{0.05}P_{0.999}S_{0.001}O_{3.999}F_{0.001}$ | 1.50 | 197.6 |
| Example 16 | $Li_{0.984}Mg_{0.005}Mn_{0.6}Fe_{0.35}V_{0.05}P_{0.995}S_{0.005}O_{3.999}F_{0.001}$ | 1.50 | 196.8 |
| Example 17 | $Li_{0.984}Mg_{0.005}Mn_{0.6}Fe_{0.35}V_{0.05}P_{0.999}S_{0.001}O_{3.995}F_{0.005}$ | 1.50 | 196.8 |
| Example 18 | $Li_{0.984}Mg_{0.005}Mn_{0.65}Fe_{0.25}V_{0.05}Co_{0.05}P_{0.999}S_{0.001}O_{3.995}F_{0.005}$ | 1.86 | 196.8 |
| Example 19 | $Li_{0.984}Mg_{0.005}Mn_{0.65}Fe_{0.20}V_{0.05}Co_{0.10}P_{0.999}S_{0.001}O_{3.995}F_{0.005}$ | 1.86 | 196.8 |
| Example 20 | $Li_{0.984}Mg_{0.005}Mn_{0.75}Fe_{0.05}V_{0.05}Co_{0.15}P_{0.999}S_{0.001}O_{3.995}F_{0.005}$ | 3.00 | 196.8 |
| Example 21 | $Li_{0.984}Mg_{0.005}Mn_{0.65}Fe_{0.25}V_{0.05}Ni_{0.05}P_{0.999}S_{0.001}O_{3.995}F_{0.005}$ | 1.86 | 196.8 |
| Example 22 | $Li_{0.984}Mg_{0.005}Mn_{0.75}Fe_{0.10}V_{0.05}Ni_{0.10}P_{0.999S}O_{.001}O_{3.995}F_{0.005}$ | 3.00 | 196.8 |
| Example 23 | $Li_{0.984}Mg_{0.005}Mn_{0.7}Fe_{0.15}V_{0.05}Co_{0.10}P_{0.999}S_{0.001}O_{3.995}F_{0.005}$ | 2.33 | 196.8 |
| Example 24 | $Li_{0.984}Mg_{0.005}Mn_{0.6}Fe_{0.25}V_{0.05}Co_{0.10}P_{0.999}S_{0.001}O_{3.99}5_{F0.005}$ | 1.50 | 196.8 |
| Example 25 | $Li_{0.984}Mg_{0.005}Mn_{0.5}Fe_{0.35}V_{0.05}Co_{0.10}P_{0.999}S_{0.001}O_{3.995}F_{0.005}$ | 1.00 | 196.8 |
| Example 26 | $Li_{1.01}Mg_{0.005}Mn_{0.7}Fe_{0.15}V_{0.05}Co_{0.10}P_{0.9}Si_{01.1}O_{3.}9F_{0.5}$ | 2.33 | 202 |
| Example 27 | $Li_{0.97}Mg_{0.005}Mn_{0.7}Fe_{0.15}V_{0.05}Co_{0.10}P_{0.92}Si_{0.08}O_{3.9}F_{0.1}$ | 2.33 | 194 |

Table 4 Performance data of the positive electrode active materials or button cells or full cells in Examples 12-27 measured according to the performance test methods described above.

| | Lattice change rate (%) | Li/Mn anti site-defects concentratio n (%) | Surface oxygen valence state | Compaction density (g/cm$^3$) | Amount of Mn and Fe exsolved after cycling (ppm) | Button cell initial gram capacity (mAh/g) | 3C charging constant current ratio (%) | Number of cycles at 45°C | Battery expansion rate store at 60°C (%) |
|---|---|---|---|---|---|---|---|---|---|
| Example 12 | 7.4 | 0.5 | -1.96 | 2.45 | 92 | 153.3 | 97.2 | 948 | 6.7 |
| Example 13 | 7.6 | 0.4 | -1.98 | 2.48 | 83 | 157.1 | 85.1 | 953 | 7.8 |
| Example 14 | 7.8 | 0.6 | -1.95 | 2.47 | 87 | 155.4 | 85.2 | 1067 | 6.9 |
| Example 15 | 6.4 | 0.5 | -1.97 | 2.49 | 86 | 156.4 | 82.1 | 938 | 7.5 |
| Example 16 | 5.4 | 0.7 | -1.94 | 2.44 | 86 | 156.1 | 87.3 | 927 | 8.4 |
| Example 17 | 4.2 | 0.6 | -1.98 | 2.42 | 88 | 156.5 | 92.1 | 919 | 7.5 |
| Example 18 | 2.5 | 0.4 | -1.96 | 2.46 | 84 | 157.4 | 94.0 | 1057 | 6.4 |
| Example 19 | 2.4 | 0.4 | -1.97 | 2.47 | 84 | 156.8 | 94.4 | 1064 | 6.7 |
| Example 20 | 2.6 | 0.4 | -1.95 | 2.45 | 86 | 154.8 | 93.7 | 975 | 7.3 |
| Example 21 | 3.3 | 0.5 | -1.93 | 2.46 | 82 | 155.7 | 91.5 | 989 | 6.3 |
| Example 22 | 3.1 | 0.5 | -1.95 | 2.46 | 75 | 157.3 | 91.6 | 964 | 6.3 |
| Example 23 | 2.8 | 0.6 | -1.96 | 2.44 | 67 | 151.8 | 84.4 | 864 | 5.9 |
| Example 24 | 2.5 | 0.5 | -1.97 | 2.45 | 65 | 152.3 | 90.2 | 976 | 5.6 |

(continued)

| | Lattice change rate (%) | Li/Mn anti site-defects concentratio n (%) | Surface oxygen valence state | Compaction density (g/cm$^3$) | Amount of Mn and Fe exsolved after cycling (ppm) | Button cell initial gram capacity (mAh/g) | 3C charging constant current ratio (%) | Number of cycles at 45°C | Battery expansion rate store at 60°C (%) |
|---|---|---|---|---|---|---|---|---|---|
| Example 25 | 2.2 | 0.4 | -1.98 | 2.46 | 58 | 153.3 | 92.2 | 986 | 5.2 |
| Example 26 | 3.4 | 0.6 | -1.95 | 2.25 | 45 | 147.3 | 92.5 | 978 | 9.3 |
| Example 27 | 2.7 | 0.5 | -1.98 | 2.28 | 42 | 145.8 | 91.8 | 937 | 10.5 |

Examples 28-41

The positive electrode active materials, button cells and full cells were prepared in the same manner as in Example 1, but the stirring speed, stirring temperature, time of grinding and stirring in the sand mill, sintering temperature, and sintering time for the preparation of the doped manganese oxalate were changed as shown in Table 5 below.
Furthermore, the performance data were measured for the positive electrode active materials, or button cells, or the full cells in Examples 28-41 according to the performance test methods described above, as shown in Table 6.

Table 5 stirring speed, stirring temperature, time of grinding and stirring in the sand mill, sintering temperature, and sintering time for the preparation of the doped manganese oxalate in Examples 28-41.

| | Stirring speed (rpm) | Stirring temperature (°C) | Grinding and stirring time (h) | Sintering temperature (°C) | Sintering time (h) |
|---|---|---|---|---|---|
| Example 28 | 200 | 50 | 12 | 700 | 10 |
| Example 29 | 300 | 50 | 12 | 700 | 10 |
| Example 30 | 400 | 50 | 12 | 700 | 10 |
| Example 31 | 500 | 50 | 12 | 700 | 10 |
| Example 32 | 600 | 50 | 10 | 700 | 10 |
| Example 33 | 700 | 50 | 11 | 700 | 10 |
| Example 34 | 800 | 50 | 12 | 700 | 10 |
| Example 35 | 600 | 60 | 12 | 700 | 10 |
| Example 36 | 600 | 70 | 12 | 700 | 10 |
| Example 37 | 600 | 80 | 12 | 700 | 10 |
| Example 38 | 600 | 90 | 12 | 600 | 10 |
| Example 39 | 600 | 100 | 12 | 800 | 10 |
| Example 40 | 600 | 110 | 12 | 700 | 8 |
| Example 41 | 600 | 120 | 12 | 700 | 12 |

Table 6 Performance data were measured for the positive electrode active materials, or button cells, or the full cells in Examples 28-41 according to the performance test methods described above.

| | Lattice change rate (%) | Li/Mn anti site-defects concentrati on (%) | Surface oxygen valence state | Compaction density ($g/cm^3$) | Amount of Mn and Fe exsolved after cycling (ppm) | Button cell initial gram capacity (mAh/g) | 3C charging constant current ratio (%) | Number of cycles at 45°C | Battery expansion rate store at 60°C (%) |
|---|---|---|---|---|---|---|---|---|---|
| Example 28 | 7.8 | 5.6 | -1.59 | 1.89 | 341 | 138.1 | 53.1 | 594 | 24.1 |
| Example 29 | 7.4 | 4.8 | -1.62 | 1.94 | 279 | 140.3 | 55.6 | 628 | 22.4 |
| Example 30 | 7.2 | 4.5 | -1.66 | 1.98 | 248 | 141.5 | 56.8 | 689 | 21.6 |
| Example 31 | 7.1 | 4.1 | -1.68 | 2.01 | 216 | 142.3 | 57.5 | 721 | 18.7 |
| Example 32 | 6.8 | 3.8 | -1.71 | 2.04 | 184 | 143.8 | 59.3 | 749 | 15.6 |
| Example 33 | 6.7 | 3.4 | -1.75 | 2.06 | 176 | 144.2 | 61.4 | 756 | 11.3 |
| Example 34 | 6.6 | 3.1 | -1.76 | 2.08 | 139 | 148.2 | 62.6 | 787 | 10.8 |
| Example 35 | 6.4 | 2.7 | -1.76 | 2.13 | 126 | 149.8 | 63.8 | 816 | 9.6 |
| Example 36 | 6.4 | 1.9 | -1.77 | 2.15 | 103 | 152.3 | 65.4 | 937 | 8.9 |
| Example 37 | 6.4 | 1.4 | -1.84 | 2.27 | 89 | 157.2 | 69.1 | 982 | 8.2 |
| Example 38 | 6.5 | 1.8 | -1.78 | 2.16 | 113 | 153.9 | 66.3 | 921 | 9.1 |
| Example 39 | 6.8 | 2.7 | -1.76 | 2.12 | 134 | 152.1 | 64.5 | 998 | 9.8 |
| Example 40 | 7.1 | 3.4 | -1.74 | 2.08 | 161 | 150.2 | 63.4 | 926 | 10.5 |

(continued)

| | Lattice change rate (%) | Li/Mn anti site-defects concentrati on (%) | Surface oxygen valence state | Compaction density ($g/cm^3$) | Amount of Mn and Fe exsolved after cycling (ppm) | Button cell initial gram capacity (mAh/g) | 3C charging constant current ratio (%) | Number of cycles at 45°C | Battery expansion rate store at 60°C (%) |
|---|---|---|---|---|---|---|---|---|---|
| Example 41 | 7.8 | 4.5 | -1.70 | 2.03 | 189 | 148.1 | 61.3 | 837 | 11.8 |

Examples 42-54

The positive electrode active materials, button cells and full cells were prepared in the same manner as in Example 1, but the lithium source, the manganese source, the phosphorus source and sources of doping elements A, B, C and D were changed, as shown in Table 7 below. The compositions of the prepared positive electrode active materials were the same as in Example 1, namely, were all $Li_{0.994}Mo_{0.001}Mn_{0.65}Fe_{0.35}P_{0.999}Si_{0.001}O_{3.999}F_{0.001}$.

Furthermore, the performance data were measured for the positive electrode active materials, or the button cells or the full cells in Examples 42 to 54 according to the performance test method described above, as shown in Table 8.

Table 7 lithium source, manganese source, phosphorus source, and sources of doping elements A, B, C and D in Examples 42-54.

| | Lithium source | Manganese source | Phosphorus source | Source of A | Source of B | Source of C | Source of D |
|---|---|---|---|---|---|---|---|
| Example 42 | LiOH | $MnCO_3$ | $NH_4H_2PO_4$ | $Mo(NO_3)_6$ | FeO | $H_4SiO_4$ | $NH_4F$ |
| Example 43 | LiOH | MnO | $NH_4H_2PO_4$ | $Mo(NO_3)_6$ | FeO | $H_4SiO_4$ | $NH_4F$ |
| Example 44 | LiOH | $Mn_3O_4$ | $NH_4H_2PO_4$ | $Mo(NO_3)_6$ | FeO | $H_4SiO_4$ | $NH_4F$ |
| Example 45 | LiOH | $Mn(NO_3)_2$ | $NH_4H_2PO_4$ | $Mo(NO_3)_6$ | FeO | $H_4SiO_4$ | $NH_4F$ |
| Example 46 | LiOH | MnO | $NH_4H_2PO_4$ | $Mo(NO_3)_6$ | $FeCO_3$ | $H_4SiO_4$ | $NH_4F$ |
| Example 47 | LiOH | MnO | $NH_4H_2PO_4$ | $Mo(NO_3)_6$ | $Fe(NO_3)_2$ | $H_4SiO_4$ | $NH_4F$ |
| Example 48 | LiOH | MnO | $NH_4H_2PO_4$ | $Mo(NO_3)_6$ | $Fe_3O_4$ | $H_4SiO_4$ | $NH_4F$ |
| Example 49 | LiOH | MnO | $NH_4H_2PO_4$ | $Mo(NO_3)_6$ | $FeC_2O_4$ | $H_4SiO_4$ | $NH_4F$ |
| Example 50 | LiOH | MnO | $NH_4H_2PO_4$ | $Mo(NO_3)_6$ | Fe | $H_4SiO_4$ | $NH_4F$ |
| Example 51 | LiOH | MnO | $NH_4H_2PO_4$ | $Mo(PO_4)_2$ | FeO | $H_4SiO_4$ | $NH_4F$ |
| Example 52 | LiOH | MnO | $NH_4H_2PO_4$ | $Mo(C_2O_4)_3$ | FeO | $H_4SiO_4$ | $NH_4F$ |
| Example 53 | LiOH | MnO | $NH_4H_2PO_4$ | $MoO_3$ | FeO | $H_4SiO_4$ | $NH_4F$ |
| Example 54 | LiOH | MnO | $NH_4H_2PO_4$ | Mo | FeO | $H_4SiO_4$ | $NH_4F$ |

Table 8 Performance data were measured for the positive electrode active materials or the button cells or the full cells in Examples 42-54.

| | Lattice change rate (%) | Li/Mn anti site-defects concentrati on (%) | Surface oxygen valence state | Compaction density (g/cm$^3$) | Amount of Mn and Fe exsolved after cycling (ppm) | Button cell initial gram capacity (mAh/g) | 3C charging constant current ratio (%) | Number of cycles at 45°C | Battery expansion rate store at 60°C (%) |
|---|---|---|---|---|---|---|---|---|---|
| Example 42 | 6.5 | 2.8 | -1.80 | 2.19 | 95 | 155.7 | 67.3 | 519 | 10.3 |
| Example 43 | 6.7 | 2.6 | -1.81 | 2.18 | 88 | 156.1 | 67.6 | 525 | 9.8 |
| Example 44 | 6.8 | 2.7 | -1.83 | 2.20 | 91 | 155.5 | 67.5 | 522 | 10.1 |
| Example 45 | 6.7 | 2.6 | -1.82 | 2.17 | 85 | 155.9 | 67.4 | 517 | 9.5 |
| Example 46 | 6.4 | 2.5 | -1.83 | 2.18 | 134 | 150.9 | 61.4 | 501 | 11.6 |
| Example 47 | 6.1 | 2.1 | -1.81 | 2.21 | 114 | 152.8 | 63.7 | 518 | 10.8 |
| Example 48 | 6.6 | 1.8 | -1.79 | 2.23 | 105 | 154.3 | 65.4 | 538 | 9.2 |
| Example 49 | 6.4 | 1.4 | -1.85 | 2.22 | 95 | 156.6 | 68.4 | 572 | 8.7 |
| Example 50 | 7.5 | 3.4 | -1.75 | 2.08 | 115 | 149.5 | 58.3 | 426 | 9.6 |
| Example 51 | 6.5 | 1.5 | -1.83 | 2.21 | 95 | 155.8 | 67.5 | 531 | 8.8 |
| Example 52 | 6.8 | 1.7 | -1.81 | 2.23 | 101 | 154.6 | 66.9 | 518 | 7.4 |
| Example 53 | 6.6 | 1.6 | -1.82 | 2.24 | 118 | 155.3 | 67.2 | 508 | 7.9 |
| Example 54 | 8.7 | 2.4 | -1.79 | 2.17 | 129 | 152.3 | 65.4 | 483 | 11.2 |

As seen in Tables 2, 4, 6, and 8 above, each of the positive electrode active materials in the Examples of this application achieved superiority over those in the Comparative Examples in one or even all of the aspects of cycling performance, high temperature stability, gram capacity, and compaction density.

As compared between Examples 18-20 and 23-25, it can be seen that (1-y):y in the range of 1 to 4, with other elements being the same, can further improve the energy density and cycling performance of the secondary batteries.

Positive electrode slurries, positive electrode plates and full cells were prepared using the positive electrode active materials prepared in respective above-mentioned Examples and Comparative Examples, and the performance tests of the slurry and cell were performed.

In the following Examples and Comparative Examples, the preparation of the electrode plates and cells, and the performance tests for the slurries and the cells were carried out according to the following methods:

1) Preparation of positive electrode plate

The positive electrode active material was mixed with a conductive agent of acetylene black, a binder of polyvinylidene fluoride (PVDF), an infiltrant and a dispersant in aN-methyl pyrrolidone solvent system, and then coated on an aluminum foil with an under-coating and dried and cold pressed to obtain a positive electrode plate. The weight ratio between the positive electrode active material, the conductive agent of acetylene black, the binder of polyvinylidene fluoride (PVDF), the dispersant and the infiltrant was $(92\text{-}Y_1\text{-}Y_2)$:2.5: 5.5:$Y_1$:$Y_2$. The coating amount was 0.02 g/cm$^2$, and the compaction density was 2.4 g/cm$^3$.

The aluminum foil with a conductive under-coating was prepared according to the following method: preparation of a conductive under-coating slurry: polyacrylic acid-acrylate copolymers (weight average molar mass of 340,000) and a conductive agent (Super P) were formulated at a weight ratio of 40:60 and were dissolved/dispersed in deionized water, and were prepared into a conductive under-coating slurry.

The conductive under-coating slurry was applied to both sides of an aluminum foil, and after drying, a conductive under-coating with a thickness of 2 μm was formed on each side. An aluminum foil with a conductive under-coating was obtained.

2) Preparation of negative electrode plate

A negative electrode active material of artificial graphite, hard carbon and conductive agent acetylene black, a binder of butadiene rubber (SBR), and a thickener of sodium carboxymethyl cellulose (CMC) were mixed well in deionized water at a weight ratio of 90:5:2:2:1, then coated on a copper foil and dried and cold pressed to obtain a negative electrode plate. The coating amount was 0.01 g/cm$^2$, and the compaction density was 1.7 g/cm$^3$.

3) Assembly of full battery

A polyethylene (PE) porous polymer film was used as the separator , and the positive electrode plate, the separator , and the negative electrode plate were stacked in order, so that the separator was between the positive electrode and negative electrode plates for separation, and a bare cell was obtained by winding. The bare cell was placed in an outer packaging, filled with an electrolyte and encapsulated to obtain a full battery (also referred to as "full cell" below).

The weight of the positive electrode active material in a single full cell was 11.85 g; the weight of the negative electrode active material was 6.73 g.

4) Slurry viscosity test

a. A viscometer was placed on a designated operating table, the bracket was adjusted so that the horizontal bubble was centered and the viscometer was in a horizontal state;

b. sampling: 500 mL of the sample to be tested was placed in a 500 mL glass beaker and tested at a constant temperature of 25°C; and

c. testing: a corresponding rotor and speed were selected, the rotor was tilted after visual inspection of the rotor for no deformation/stains and was slowly infiltrated until all parts below the rotor groove was infiltrated, the slurry was not allowed to be stirred by the rotor during the infiltration process, test was activated by pressing the start button and performed for 10 minutes, the data was read and recorded every minute, the final viscosity was the average

value of 10 groups of data.

FIG. 8 exemplarily shows the instrumentation and test procedure used for the slurry viscosity test.

5) Slurry flowability test (gel test)

Test method: 500 mL of the sample to be tested was contained in a 500 mL glass beaker, a steel ruler of 25 cm long, 2 cm wide with a scale was vertically positioned along the edge of the beaker, slowly immersed into the liquid until a position 4-5 cm below the liquid surface, and the slurry was slowly picked up, and the flow of the slurry brought out by the steel ruler was examined, and photos were taken for recording. The slurry was determined to be unqualified if gel was present.

6) Slurry filtration performance test

A 200-mesh filter of 25cm*25cm was folded into a triangle, as shown in FIG. 9; 500 mL of the slurry was taken and poured quickly along one side of the three-layer filter, the timing was started as the slurry was completely poured into the filter, and the filtration time was recorded when the amount of slurry passing through the filter was 300mL. The slurry was determined to be unqualified if the filtration time was greater than 2 minutes.

7) Discharge DC impedance test

At 25°C, 1.0 C constant current and constant voltage were used to charge the lithium-ion battery to 4.3 V (1.0 C refers to the nominal capacity); the battery power was adjusted to 50% SoC at a rate of 1.0 C and left for 5 minutes, and then was discharged at 4 C constant current for 30 s (voltage data was collected every 1 s), the impedance of the 30 s discharging was calculated as the test data.

8) The number of cycles of capacity retention rate of 80% at 45°C (referred to as "45°C cycle number")

The full battery was charged to 4.3 V at a constant temperature of 45°C, at 2.5-4.3V, then charged at the constant voltage of 4.3 V until the current was less than or equal to 0.05 mA, left for 5 minutes, then discharged to 2.5 V at 1 C, and the discharge capacity was recorded as D0. The charge/discharge cycle was repeated until the discharge capacity was reduced to 80% of D0. The number of cycles the battery has undergone at this point was recorded.

Table 9 Positive electrode active material compositions in Examples 1'-11' and Comparative Examples 1'-11'.

| | Positive electrode active material |
|---|---|
| Comparative Example 1' | $LiMnPO_4$ |
| Comparative Example 2' | $LiMn_{0.85}Fe_{0.15}PO_4$ |
| Comparative Example 3' | $Li_{0.990}Mg_{0.005}Mn_{0.95}Zn_{0.05}PO_4$ |
| Comparative Example 4' | $Li_{0.90}Nb_{0.01}Mn_{0.6}Fe_{0.4}PO_{3.95}F_{0.05}$ |
| Comparative Example 5' | $Li_{0.76}Mg_{0.12}Mn_{0.7}Fe_{0.3}P_{0.999}Si_{0.001}O_{3.999}F_{0.001}$ |
| Comparative Example 6' | $Li_{0.998}Mg_{0.001}Mn_{0.4}Zn_{0.6}P_{0.999}Si_{0.001}O_{3.999}F_{0.001}$ |
| Comparative Example 7' | $Li_{1.068}Mg_{0.001}Mn_{0.7}Fe_{0.3}P_{0.88}Si_{0.12}O_{3.95}F_{0.05}$ |
| Comparative Example 8' | $Li_{0.948}Mg_{0.001}Mn_{0.6}Fe_{0.4}P_{0.93}Si_{0.07}O_{3.88}F_{0.12}$ |
| Comparative Example 9' | Same as Example 1' |
| Comparative Example 10' | Same as Example 1' |
| Comparative Example 11' | Same as Example 1' |
| Example 1' | $Li_{0.994}Mo_{0.001}Mn_{0.65}Fe_{0.35}P_{0.999}Si_{0.001}O_{3.999}F_{0.001}$ |
| Example 2' | $Li_{0.977}Mg_{0.001}Mn_{0.65}Fe_{0.34}Ti_{0.01}P_{0.999}N_{0.001}O_{3.999}F_{0.001}$ |
| Example 3' | $Li_{0.992}W_{0.001}Mn_{0.65}Fe_{0.35}P_{0.999}S_{0.001}O_{3.999}F_{0.001}$ |

(continued)

| | Positive electrode active material |
|---|---|
| Example 4' | $Li_{0.997}Al_{0.001}Mn_{0.65}Fe_{0.35}P_{0.999}Si_{0.001}O_{3.999}Cl_{0.001}$ |
| Example 5' | $Li_{0.993}Nb_{0.001}Mn_{0.65}Fe_{0.345}V_{0.005}P_{0.999}S_{0.001}O_{3.999}F_{0.001}$ |
| Example 6' | $Li_{0.993}Nb_{0.001}Mn_{0.65}Fe_{0.34}V_{0.005}Mg_{0.005}P_{0.999}S_{0.001}O_{3.999}F_{0.001}$ |
| Example 7' | $Li_{0.993}Nb_{0.001}Mn_{0.65}Fe_{0.34}V_{0.005}Co_{0.005}P_{0.999}S_{0.001}O_{3.999}F_{0.001}$ |
| Example 8' | $Li_{0.993}Nb_{0.001}Mn_{0.65}Fe_{0.34}V_{0.005}Ni_{0.005}P_{0.999}S_{0.001}O_{3.999}F_{0.001}$ |
| Example 9' | $Li_{0.991}Nb_{0.001}Mn_{0.65}Fe_{0.349}Ti_{0.001}P_{0.999}S_{0.001}O_{3.999}Cl_{0.001}$ |
| Example 10' | $Li_{0.995}Nb_{0.001}Mn_{0.65}Fe_{0.34}V_{0.005}Mg_{0.005}P_{0.999}Si_{0.001}O_{3.999}Br_{0.001}$ |
| Example 11' | $Li_{0.998}Mg_{0.001}Mn_{0.65}Fe_{0.345}V_{0.005}P_{0.999}Si_{0.001}O_{3.999}Br_{0.001}$ |

Table 10 Dispersant and infiltrant used, and slurry and battery performances for Examples 1'-11' and Comparative Examples 1'-11'.

| | Dispersant | | | | | | Infiltrant | | X1/X2 | Slurry Performances | | | Battery Performances | |
|---|---|---|---|---|---|---|---|---|---|---|---|---|---|---|
| | Type | M1 | M2 | M3 | Weight average molar mass (million) | X1 | Type | X2 | | Flowability | Viscosity mPa.s | Filterability | DCR (w.r.t. Comparative Example 1') | 45 °C Cycle numbers |
| Comparative Example 1' | / | / | / | / | / | / | / | / | | Unqualified | 21000 | Unqualified | 100% | 120 |
| Comparative Example 2' | / | / | / | / | / | / | / | / | / | Unqualified | 20000 | Unqualified | 102% | 133 |
| Comparative Example 3' | / | / | / | / | / | / | / | / | / | Unqualified | 23000 | Unqualified | 110% | 144 |
| Comparative Example 4' | / | / | / | / | / | / | / | / | / | Unqualified | 18000 | Unqualified | 102% | 157 |
| Comparative Example 5' | / | / | / | / | / | / | / | / | / | Unqualified | 15000 | Unqualified | 90% | 396 |
| Comparative Example 6' | / | / | / | / | / | / | / | / | / | Unqualified | 20000 | Unqualified | 87% | 475 |
| Comparative Example 7' | / | / | / | / | / | / | / | / | / | Unqualified | 28000 | Unqualified | 88% | 399 |
| Comparative Example 8' | / | / | / | / | / | / | / | / | / | Unqualified | 18000 | Unqualified | 85% | 417 |
| Comparative Example 9' | / | / | / | / | / | / | / | / | / | Unqualified | 19000 | Unqualified | 86% | 470 |
| Comparative Example 10' | / | / | / | / | / | / | Same as Example 1' | Same as Example 1' | / | Unqualified | 10000 | Qualified | 116% | 503 |
| Comparative Example 11' | NBR (nitrile butadiene rubber) | 40% | 50% | 10% | 20 | 0.20% | Same as Example 1' | Same as Example 1' | Same as Example 1' | Qualified | 8000 | Qualified | 110% | 500 |

(continued)

| | Dispersant | | | | | | Infiltrant | | X1/X2 | Slurry Performances | | | Battery Performances | |
|---|---|---|---|---|---|---|---|---|---|---|---|---|---|---|
| | Type | M1 | M2 | M3 | Weight average molar mass (million) | X1 | Type | X2 | | Flowability | Viscosity mPa.s | Filterability | DCR (w.r.t. Comparative Example 1') | 45 °C Cycle numbers |
| Example 1' | HNBR (hydrogenated nitrile butadiene rubber) | 40.0% | 59.9% | 0.10% | 20 | 0.20% | Maleic anhydride-styrene copolymer (molar mass 5000) | 0.50% | 0.40 | Qualified | 8500 | Qualified | 80% | 600 |
| Example 2' | Same as Example 1' | | | | | | | | | Qualified | 11500 | Qualified | 76% | 570 |
| Example 3' | | | | | | | | | | Qualified | 12500 | Qualified | 78% | 650 |
| Example 4' | | | | | | | | | | Qualified | 9500 | Qualified | 80% | 681 |
| Example 5' | | | | | | | | | | Qualified | 15000 | Qualified | 84% | 759 |
| Example 6' | | | | | | | | | | Qualified | 7500 | Qualified | 80% | 741 |
| Example 7' | | | | | | | | | | Qualified | 9300 | Qualified | 81% | 808 |
| Example 8' | | | | | | | | | | Qualified | 9500 | Qualified | 85% | 796 |
| Example 9' | | | | | | | | | | Qualified | 7000 | Qualified | 88% | 680 |
| Example 10' | | | | | | | | | | Qualified | 7800 | Qualified | 79% | 679 |
| Example 11' | | | | | | | | | | Qualified | 9500 | Qualified | 76% | 718 |

As can be seen from the above table, the processibility of the slurries without both dispersant and infiltrant, or with only an infiltrant but without a dispersant, was poor and affected the battery performance. The use of dispersant and infiltrant, especially hydrogenated nitrile butadiene rubber and maleic anhydride-styrene copolymer as the dispersant and the infiltrant, respectively, can lead to significant improvements in the processibility and/or battery performance of the slurries.

The positive electrode active material compositions in Examples 12'-27' are shown in Table 11, and the types of dispersant and infiltrant, the weight average molar mass and monomer content of the dispersant (M1, M2, M3), mass percentages X1, X2, and X1/X2 were the same as those in Example 1'.

Table 11 Positive electrode active material compositions in Examples 12'-27'.

| | Positive electrode active material | (1-y):y | a:x |
|---|---|---|---|
| Example 12' | $Li_{0.997}Mg_{0.001}Mn_{0.68}Fe_{0.3}V_{0.02}P_{0.999}N_{0.001}O_{3.999}F_{0.001}$ | 2.13 | 997 |
| Example 13' | $Li_{0.997}Mg_{0.001}Mn_{0.58}Fe_{0.4}V_{0.02}P_{0.999}N_{0.001}O_{3.999}F_{0.001}$ | 1.38 | 997 |
| Example 14' | $Li_{0.997}Mg_{0.001}Mn_{0.65}Fe_{0.3}V_{0.05}P_{0.999}N_{0.001}O_{3.999}F_{0.001}$ | 1.86 | 997 |
| Example 15' | $Li_{0.988}Mg_{0.005}Mn_{0.6}Fe_{0.35}V_{0.05}P_{0.999}S_{0.001}O_{3.999}F_{0.001}$ | 1.50 | 197.6 |
| Example 16' | $Li_{0.984}Mg_{0.005}Mn_{0.6}Fe_{0.35}V_{0.05}P_{0.995}S_{0.005}O_{3.999}F_{0.001}$ | 1.50 | 196.8 |
| Example 17' | $Li_{0.984}Mg_{0.005}Mn_{0.6}Fe_{0.35}V_{0.05}P_{0.999}S_{0.001}O_{3.995}F_{0.005}$ | 1.50 | 196.8 |
| Example 18' | $Li_{0.984}Mg_{0.005}Mn_{0.65}Fe_{0.25}V_{0.05}Co_{0.05}P_{0.999}S_{0.001}O_{3.995}F_{0.005}$ | 1.86 | 196.8 |
| Example 19' | $Li_{0.984}Mg_{0.005}Mn_{0.65}Fe_{0.20}V_{0.05}Co_{0.10}P_{0.999}S_{0.001}O_{3.995}F_{0.005}$ | 1.86 | 196.8 |
| Example 20' | $Li_{0.984}Mg_{0.005}Mn_{0.75}Fe_{0.05}V_{0.05}Co_{0.15}P_{0.999}S_{0.001}O_{3.995}F_{0.005}$ | 3.00 | 196.8 |
| Example 21' | $Li_{0.984}Mg_{0.005}Mn_{0.65}Fe_{0.25}V_{0.05}Ni_{0.05}P_{0.999}S_{0.001}O_{3.995}F_{0.005}$ | 1.86 | 196.8 |
| Example 22' | $Li_{0.984}Mg_{0.005}Mn_{0.75}Fe_{0.10}V_{0.05}Ni_{0.10}P_{0.999}S_{0.001}O_{3.995}F_{0.005}$ | 3.00 | 196.8 |
| Example 23' | $Li_{0.984}Mg_{0.005}Mn_{0.7}Fe_{0.15}V_{0.05}Co_{0.10}P_{0.999}S_{0.001}O_{3.995}F_{0.005}$ | 2.33 | 196.8 |
| Example 24' | $Li_{0.984}Mg_{0.005}Mn_{0.6}Fe_{0.25}V_{0.05}Co_{0.10}P_{0.999}S_{0.001}O_{3.995}F_{0.005}$ | 1.50 | 196.8 |
| Example 25' | $Li_{0.984}Mg_{0.005}Mn_{0.5}Fe_{0.35}V_{0.05}Co_{0.10}P_{0.999}S_{0.001}O_{3.995}F_{0.005}$ | 1.00 | 196.8 |
| Example 26' | $Li_{1.01}Mg_{0.005}Mn_{0.7}Fe_{0.15}V_{0.05}Co_{0.10}P_{0.9}Si_{0.1}O_{3.92}F_{0.08}$ | 2.33 | 202 |
| Example 27' | $Li_{0.97}Mg_{0.005}Mn_{0.7}Fe_{0.15}V_{0.05}Co_{0.10}P_{0.92}Si_{0.08}O_{3.9}F_{0.1}$ | 2.33 | 194 |

Table 12 Slurry performances and battery performances for Examples 12'-27'.

| | Slurry Performances | | | Battery Performances | |
|---|---|---|---|---|---|
| | Flowability | Viscosity mPa.s | Filterability | DCR (w.r.t. Comparative Example 1') | 45°C Cycle number |
| Example 12' | Qualified | 15500 | Qualified | 71% | 1048 |
| Example 13' | Qualified | 12500 | Qualified | 71% | 1053 |
| Example 14' | Qualified | 10500 | Qualified | 70% | 1100 |
| Example 15' | Qualified | 11000 | Qualified | 74% | 972 |
| Example 16' | Qualified | 7800 | Qualified | 69% | 1102 |
| Example 17' | Qualified | 8300 | Qualified | 73% | 1119 |
| Example 18' | Qualified | 9100 | Qualified | 66% | 1258 |
| Example 19' | Qualified | 14300 | Qualified | 68% | 1264 |
| Example 20' | Qualified | 7700 | Qualified | 69% | 1170 |
| Example 21' | Qualified | 16000 | Qualified | 66% | 1295 |

(continued)

| | Slurry Performances | | | Battery Performances | |
|---|---|---|---|---|---|
| | Flowability | Viscosity mPa.s | Filterability | DCR (w.r.t. Comparative Example 1') | 45°C Cycle number |
| Example 22' | Qualified | 10300 | Qualified | 65% | 1061 |
| Example 23' | Qualified | 12500 | Qualified | 66% | 1164 |
| Example 24' | Qualified | 10000 | Qualified | 76% | 1167 |
| Example 25' | Qualified | 7800 | Qualified | 76% | 1264 |
| Example 26' | Qualified | 8100 | Qualified | 70% | 1277 |
| Example 27' | Qualified | 10500 | Qualified | 72% | 941 |

As shown in the tables above, for each of the positive electrode active materials in Table 11, a good processability and/or battery performances of the slurries can be obtained using hydrogenated nitrile butadiene rubber and maleic anhydride-styrene copolymer as the dispersant and the infiltrant, respectively.

Based on the hydrogenated nitrile butadiene rubber used in Example 1', the content of each monomer was adjusted to obtain hydrogenated nitrile butadiene rubber with different hydrogenation degrees and used as a dispersant for the preparation of positive electrode slurries, as shown in Examples 2-1 to 2-7. The weight average molar mass of HNBR, the type of infiltrant, the mass percentages X1 and X2, and X1/X2 were the same as those in Example 1'.

Table 13 Dispersant parameters, slurry performances and battery performances for Examples 2-1 to 2-7.

| | Dispersant | | | | | Positive electrode slurry performances | | | Battery performances | |
|---|---|---|---|---|---|---|---|---|---|---|
| | Type | M1 | M2 | M3 | M3/(M2+M3) | Flowability | Viscosity mPa.s | Filterability | DCR (w.r.t. Example 2-7) | 45°C Cycle number |
| Example 1' | HNBR | 40.0% | 59.9% | 0.10% | 0.17% | Qualified | 8500 | Qualified | 80% | 600 |
| Example 2-1 | HNBR | 45% | 55% | 0% | 0% | Qualified | 11000 | Qualified | 81% | 684 |
| Example 2-2 | HNBR | 32% | 67.66% | 0.34% | 0.50% | Qualified | 10600 | Qualified | 82% | 710 |
| Example 2-3 | HNBR | 50% | 49.50% | 0.50% | 1% | Qualified | 10000 | Qualified | 77% | 676 |
| Example 2-4 | HNBR | 35% | 63.70% | 1.30% | 2% | Qualified | 9600 | Qualified | 70% | 704 |
| Example 2-5 | HNBR | 40% | 58.20% | 1.80% | 3% | Qualified | 8800 | Qualified | 80% | 801 |
| Example 2-6 | HNBR | 25% | 71.25% | 3.75% | 5% | Qualified | 10500 | Qualified | 85% | 720 |
| Example 2-7 | HNBR | 35% | 59.80% | 5.20% | 8% | Qualified | 8600 | Qualified | 100% | 110 |

As shown in Table 13, the HNBR used in Example 2-7 had lower hydrogenation compared to the other examples, resulting in poorer battery performance despite the lower viscosity of the positive electrode slurry.

On the basis of Example 1', the proportional relationship between the content of dispersant and infiltrant was adjusted to prepare positive electrode slurries, as shown in Examples 3-1 to 3-10. The parameters of dispersant and infiltrant were the same as Example 1' except that the mass percentages of X1 and X2, and X1/X2 were different from Example 1.

Table 14 Proportions between dispersant and infiltrant, slurry performances and battery performances for Examples 3-1 to 3-10.

| | Dispersant | Infiltrant | | Positive electrode slurry performances | | | Battery performances | |
|---|---|---|---|---|---|---|---|---|
| | X1 (%) | X2 (%) | X1/X2 | Flowability | Viscosity mPa.s | Filterability | DCR (w.r.t. Example 3-1) | 45°C Cycle number |
| Example 3-1 | 0.05 | 0.5 | 0.10 | Qualified | 10800 | Qualified | 100% | 609 |
| Example 3-2 | 0.1 | 0.5 | 0.20 | Qualified | 9000 | Qualified | 105% | 613 |
| Example 3-3 | 0.5 | 0.5 | 1.00 | Qualified | 10500 | Qualified | 110% | 542 |
| Example 3-4 | 1 | 0.5 | 2.00 | Qualified | 7100 | Qualified | 113% | 500 |
| Example 3-5 | 0.25 | 0.05 | 5.00 | Unqualified | 36000 | Qualified | 97% | 645 |
| Example 3-6 | 0.25 | 0.2 | 1.25 | Unqualified | 33000 | Qualified | 100% | 690 |
| Example 3-7 | 0.25 | 0.3 | 0.83 | Qualified | 10200 | Qualified | 95% | 700 |
| Example 3-8 | 0.25 | 0.8 | 0.31 | Qualified | 13000 | Qualified | 112% | 694 |
| Example 3-9 | 0.25 | 2 | 0.13 | Qualified | 5000 | Qualified | 108% | 639 |
| Example 3-10 | 0.05 | 2 | 0.03 | Unqualified | 17700 | Unqualified | 120% | 293 |

As shown in Table 14, compared to other examples, the X1/X2 of Example 3-10 were too small and the slurry performance and battery performance were poor.

On the basis of Example 1', the type of infiltrant was changed and the positive electrode slurry was prepared as shown in Examples 4-1 to 4-6.

Table 15 Type of infiltrant, slurry performances and battery performances for Examples 4-1 to 4-6.

| | Infiltrant | | | Positive electrode slurry performances | | | Battery performances | |
|---|---|---|---|---|---|---|---|---|
| | Type | X2 | X1/X2 | Flowability | Viscosity mPa.s | Filterability | DCR (w.r.t. Example 4-1) | 45°C Cycle number |
| Example 4-1 | No infiltrant added | / | / | Unqualified | 27000 | Unqualified | 100% | 597 |
| Example 4-2 | PVP (polyvinylpyrrolidone) | 0.50% | 0.4 | Qualified | 16000 | Qualified | 115% | 602 |
| Example 4-3 | Isopropanolamine | 1.00% | 0.2 | Qualified | 11100 | Qualified | 105% | 610 |
| Example 4-4 | 2-amino-2methyl-1-propanol | 1.00% | 0.2 | Qualified | 9800 | Qualified | 104% | 684 |
| Example 4-5 | Styrene-maleic anhydride copolymer | 0.50% | 0.4 | Qualified | 7900 | Qualified | 108% | 732 |
| Example 4-6 | Styrene-maleic anhydride copolymer | 0.30% | 0.67 | Qualified | 8100 | Qualified | 103% | 734 |

As shown in the table above, HNBR was compounded with PVP, isopropanolamine, 2-amino-2methyl-1-propanol, or styrene-maleic anhydride copolymer, respectively, to obtain a good processability and/or battery performance of the slurries.

It should be noted that the present application is not limited to the above-mentioned embodiments. The above-mentioned embodiments are merely exemplary examples, and embodiments that have substantially the same configuration as the technical idea and exert the same effects within the scope of the technical proposals of the present application are included in the technical scope of the present application. In addition, without departing from the scope of the present application, various modifications added to the embodiments that are conceivable by those skilled in the art, and other forms constructed by combining some components in the embodiments are also included in the scope of the present application.

## Claims

1. A positive electrode active material composition, comprising a positive electrode active material and a dispersant, wherein,

    the positive electrode active material has a chemical formula of $Li_aA_xMn_{1-y}B_yP_{1-z}C_zO_{4-n}D_n$, A comprises one or more elements selected from Zn, Al, Na, K, Mg, Nb, Mo, and W; B comprises one or more elements selected from Ti, V, Zr, Fe, Ni, Mg, Co, Ga, Sn, Sb, Nb, and Ge; C comprises one or more elements selected from B (boron), S, Si, and N; D comprises one or more elements selected from S, F, Cl, and Br; a is selected from a range of 0.9 to 1.1; x is selected from a range of 0.001 to 0.1; y is selected from a range of 0.001 to 0.5; z is selected from a range of 0.001 to 0.1; n is selected from a range of 0.001 to 0.1; and the positive electrode active material is electrically neutral; and
    the dispersant comprises a polymer, and the polymer comprises:

        a first monomeric unit represented by Formula 1;
        a second monomeric unit, which is at least one selected from the group consisting of a monomeric unit represented by Formula 2 and a monomeric unit represented by Formula 3; and
        a third monomeric unit, which is at least one selected from the group consisting of a monomeric unit represented by Formula 4 and a monomeric unit represented by Formula 5;

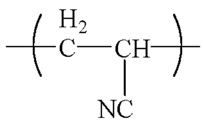
Formula 1

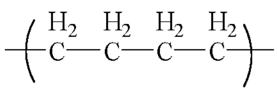
Formula 2

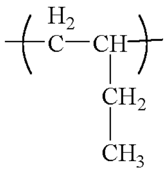
Formula 3

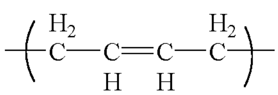
Formula 4

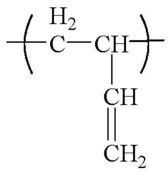

Formula 5.

2. The positive electrode active material composition according to claim 1, wherein, with respect to a total mass of the polymer,

the first monomeric unit has a mass percentage content of M1, and M1 is 10%-55%, optionally 25%-55%; and/or,
the second monomeric unit has a mass percentage content of M2, and M2 is 40%-80%, optionally 50%-70%; and/or,
the third monomeric unit has a mass percentage content of M3, and M3 is 0%-10% and optionally 0.001%-2%.

3. The positive electrode active material composition according to claim 2, wherein, M3/(M2+M3) is 0%-5%, optionally 0.001%-1%.

4. The positive electrode active material composition according to any one of claims 1-3, wherein,

the polymer is hydrogenated nitrile butadiene rubber; and/or,
the polymer has a weight average molar mass of 50,000-500,000, optionally 150,000-350,000; and/or,
with respect to a total mass of the positive electrode active material, the dispersant has a mass percentage content of X1, and X1 is 0.05%-1%, optionally 0.1%-0.5%.

5. The positive electrode active material composition according to any one of claims 1-4, wherein, the positive electrode active material composition further comprises an infiltrant, the infiltrant has a surface tension of 20 mN/m-40 mN/m, and a molecular structure of the infiltrant comprises at least one of the following functional groups: -CN, - $NH_2$, -NH-, - N-, -OH, -C=O, -COO-, -C(=O)-O-C(=O)-.

6. The positive electrode active material composition according to claim 5, wherein,

the infiltrant comprises one or more selected from a small-molecule organic solvent and a low-molecular-weight polymer;
the small-molecule organic solvent comprises one or more selected from an alcohol amine compound, an alcohol compound, and a nitrile compounds, optionally, the alcohol amine compound has a carbon atom number of 1-16, optionally 2-6;
the low-molecular-weight polymer comprises one or more selected from a maleic anhydride-styrene copolymer, polyvinylpyrrolidone, polysiloxane, optionally, the low-molecular-weight polymer has a weight average molar mass of 6000 or less, optionally 3000-6000.

7. The positive electrode active material composition according to claim 5 or 6, wherein, with respect to a total mass of the positive electrode active material, the infiltrant has a mass percentage content of X2, X2 is 0.05%-2%, optionally 0.2%-0.8%;
optionally, X1/X2 is 0.05-20, optionally 0.1-1, and further 0.3-0.8.

8. The positive electrode active material composition according to any one of claims 1-7, wherein, A, C, and D are each independently any one element in respective ranges mentioned above, and B is at least two elements in a range thereof;

optionally, A is any one element selected from Mg and Nb;
B is at least two elements selected from Fe, Ti, V, Co, and Mg, optionally Fe with more than one element selected from Ti, V, Co, and Mg;
C is S; and/or,
D is F.

9. The positive electrode active material composition according to any one of claims 1-8, wherein,

x is selected from a range of 0.001-0.005; and/or,
y is selected from a range of 0.01-0.5, optionally from a range of 0.25-0.5; and/or,
z is selected from a range of 0.001-0.005; and/or,
n is selected from a range of 0.001-0.005.

**10.** The positive electrode active material composition according to any one of claims 1-9, wherein, (1-y):y is in a range of 1 to 4, optionally in a range of 1.5 to 3, and a:x is in a range of 9 to 1100, optionally in a range of 190 to 998.

**11.** The positive electrode active material composition according to any one of claims 1-10, wherein, the positive electrode active material has a lattice change rate of 8% or less, optionally 4% or less.

**12.** The positive electrode active material composition according to any one of claims 1-11, wherein, the positive electrode active material has a Li/Mn anti site-defect concentration of 2% or less, optionally 0.5% or less.

**13.** The positive electrode active material composition according to any one of claims 1-12, wherein, the positive electrode active material has a surface oxygen valence state of -1.82 or less, optionally -1.89 to -1.98.

**14.** The positive electrode active material composition according to any one of claims 1-13, wherein, the positive electrode active material has a compaction density at 3 T of 2.0 $g/cm^3$ or more, optionally 2.2 $g/cm^3$ or more.

**15.** The positive electrode active material composition according to any one of claims 1-14, wherein, a surface of the positive electrode active material is coated with a carbon material.

**16.** A positive electrode slurry, comprising the positive electrode active material composition according to any one of claims 1-15; optionally comprising one or more of a solvent, a positive electrode conductive agent, and a positive electrode binder.

**17.** The positive electrode slurry according to claim 16, wherein,

the solvent comprises N-methylpyrrolidone (NMP); and/or,
the positive electrode binder comprises one or more selected from polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a vinylidene fluoride-hexafluoropropylene copolymer, and fluorinated acrylate resin; and/or,
the positive electrode conductive agent comprises one or more selected from superconducting carbon, acetylene black, carbon black, Ketjen black, carbon dots, carbon nanotubes, graphene, and carbon nanofibers.

**18.** The positive electrode slurry according to claim 16 or 17, wherein,

the positive electrode slurry has a solid content of 40%-70%, optionally 55%-65%;
and/or,
the positive electrode slurry has a viscosity of 3000 mpa.s-50,000 mpa.s at 20°C, optionally 10,000 mpa.s-20,000 mpa.s.

**19.** A positive electrode plate, comprising a positive electrode current collector and a positive electrode film layer disposed on at least one surface of the positive electrode current collector, wherein, the positive electrode film layer comprises the positive electrode active material composition according to any one of claims 1-15, or is prepared by coating the positive electrode slurry according to any one of claims 16-18;
optionally, a coating method is selected from lifting method, film- pulling method, electrostatic spraying method, and spin coating method.

**20.** The positive electrode plate according to claim 19, wherein, with respect to a total mass of the positive electrode film layer,

the positive electrode active material has a mass percentage content of W1, W1 is 90%-99.5%, optionally 95%-99%; and/or,
the dispersant has a mass percentage content of W2, W2 is 1% or less, optionally 0.1%-0.5%; and/or,
the infiltrant has a mass percentage content of W3, W3 is 2% or less, optionally 0.1%-0.5%; and/or,

the positive electrode binder has a mass percentage content of W4, W4 is 5.5% or less, optionally 1%-3%; and/or, the positive electrode conductive agent has a mass percentage content of W5, W5 is 2.5% or less, optionally 0.1 %-1 %.

**21.** A secondary battery, comprising the positive electrode plate according to claim 19 or 20.

**22.** A battery module, comprising the positive electrode plate according to claim 19 or 20, or the secondary battery according to claim 21.

**23.** A battery pack, comprising the positive electrode plate according to claim 19 or 20, the secondary battery according to claim 21, or the battery module according to claim 22.

**24.** An electric device, comprising the positive electrode plate according to claim 19 or 20, the secondary battery according to claim 21, the battery module according to claim 22, or the battery pack according to claim 23.

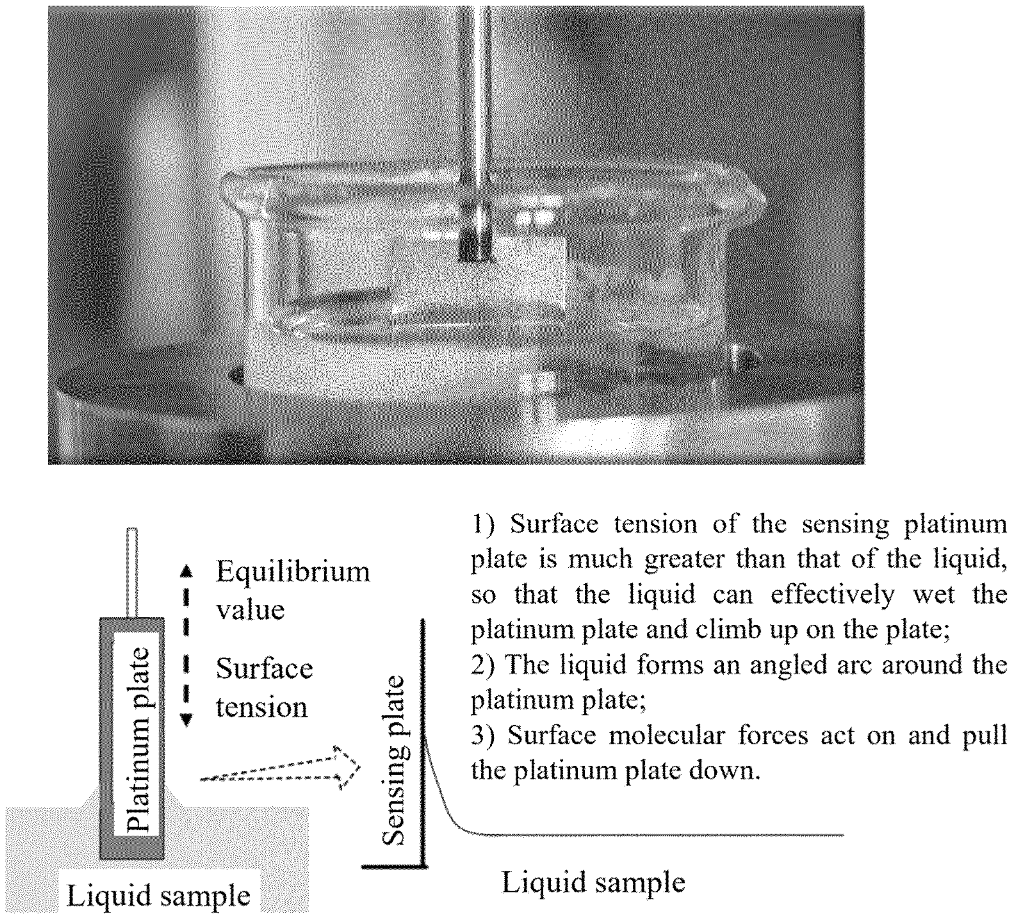
Equilibrium value
Surface tension
Platinum plate
Liquid sample
Sensing plate
1) Surface tension of the sensing platinum plate is much greater than that of the liquid, so that the liquid can effectively wet the platinum plate and climb up on the plate;
2) The liquid forms an angled arc around the platinum plate;
3) Surface molecular forces act on and pull the platinum plate down.
Liquid sample

FIG. 1

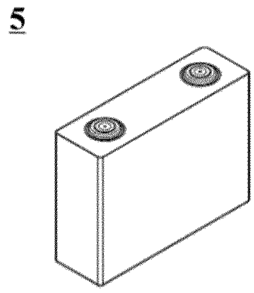
5

FIG. 2

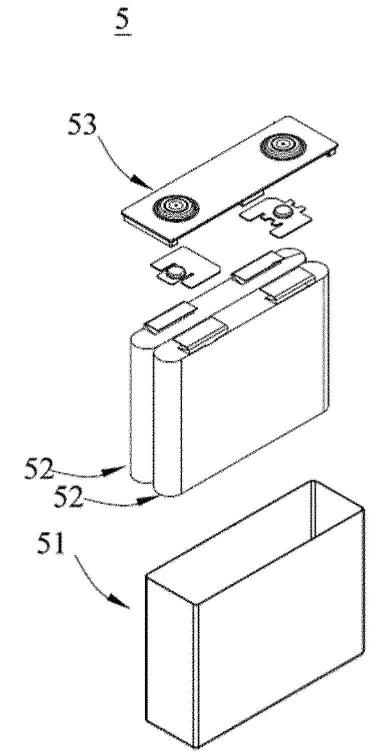


FIG. 3

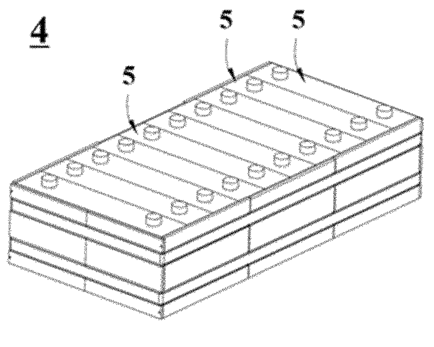


FIG. 4

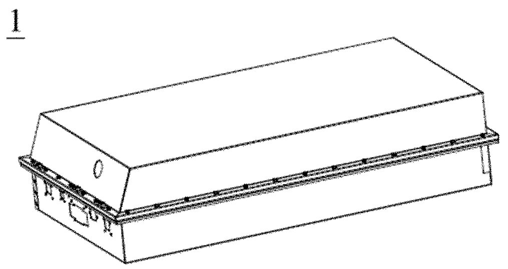


FIG. 5

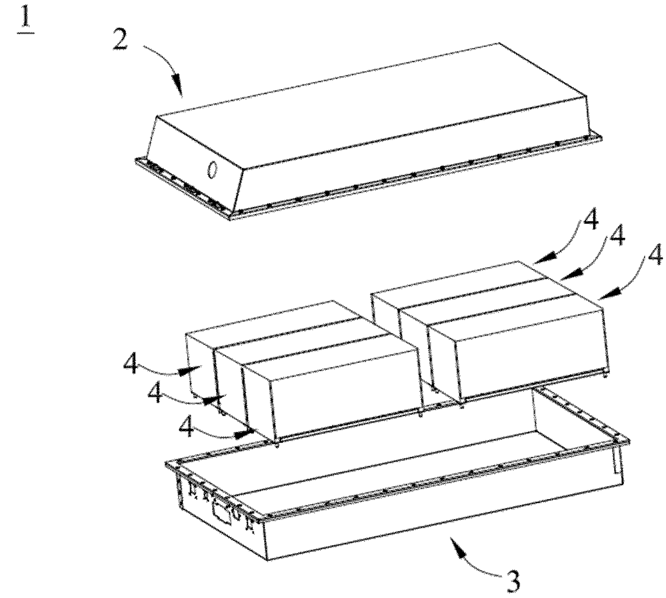


FIG. 6

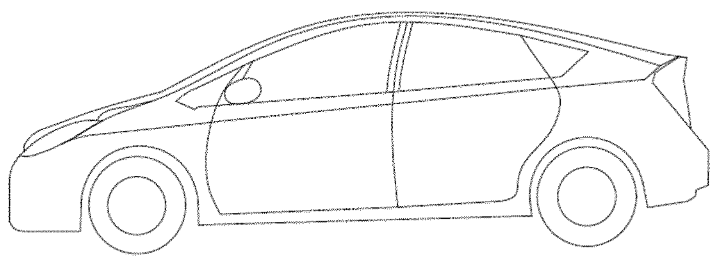

FIG. 7

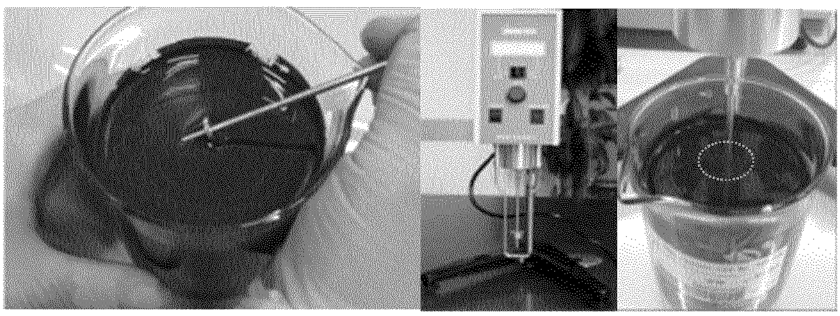

FIG. 8

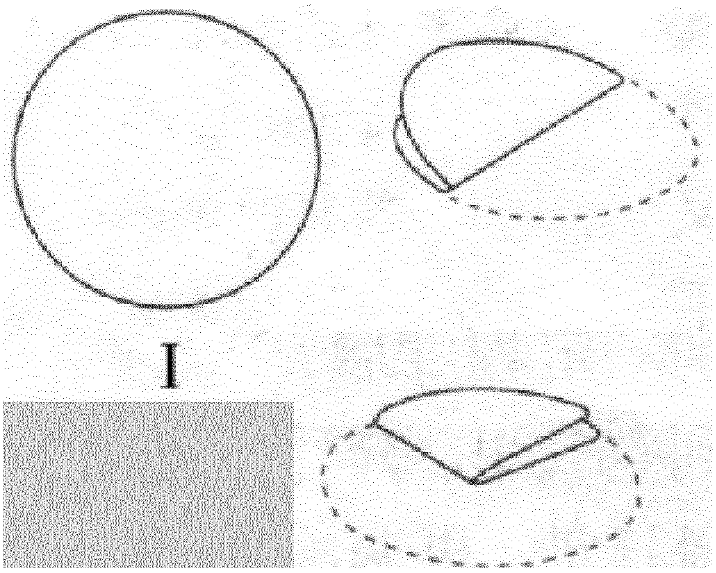


FIG. 9

**INTERNATIONAL SEARCH REPORT**

International application No. **PCT/CN2022/084848**

**A. CLASSIFICATION OF SUBJECT MATTER**

H01M 4/58(2010.01)i; H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 锂电池, 正极, 磷酸锰锂, 掺杂, 分散剂, 氢化丁腈橡胶, lithium battery, cathode, lithium manganese phosphate, dope, dispersant, hydrogenated nitrile rubber

**C. DOCUMENTS CONSIDERED TO BE RELEVANT**

| Category* | Citation of document, with indication, where appropriate, of the relevant passages | Relevant to claim No. |
|---|---|---|
| Y | CN 104577115 A (QINGHAI CONTEMPORARY AMPEREX TECHNOLOGY LTD.) 29 April 2015 (2015-04-29)<br>description, paragraphs 5-91 | 1-24 |
| Y | LONG, Yun-Fei et al. "Electrochemical Performance of Li0.995Al0.005Mn0.85Fe0.15PO4/C as a Cathode Material for Lithium-Ion Batteries"<br>*Int.J.Electrochem.Sci.,* Vol. 11, No. 12, 10 November 2016 (2016-11-10), ISSN: 1452-3981,<br>abstract, and page 10099, paragraph 1 | 1-24 |
| Y | CN 114174384 A (LG CHEMICAL LTD.) 11 March 2022 (2022-03-11)<br>description, paragraphs 37-169 | 1-24 |
| Y | CN 106981648 A (NORTHEASTERN UNIVERSITY AT QINHUANGDAO) 25 July 2017 (2017-07-25)<br>description, paragraphs 5-79 | 1-24 |
| Y | CN 110431697 A (LG CHEMICAL LTD.) 08 November 2019 (2019-11-08)<br>description, paragraphs 10-37 | 1-24 |
| A | CN 103779566 A (ZHANG PING) 07 May 2014 (2014-05-07)<br>entire document | 1-24 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 December 2022** | **28 December 2022** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

**INTERNATIONAL SEARCH REPORT**

International application No.
**PCT/CN2022/084848**

**C. DOCUMENTS CONSIDERED TO BE RELEVANT**

| Category* | Citation of document, with indication, where appropriate, of the relevant passages | Relevant to claim No. |
|---|---|---|
| A | CN 107706402 A (NORTHEASTERN UNIVERSITY AT QINHUANGDAO) 16 February 2018 (2018-02-16) entire document | 1-24 |
| A | JP 2010287450 A (GS YUASA CORP.) 24 December 2010 (2010-12-24) entire document | 1-24 |

Form PCT/ISA/210 (second sheet) (January 2015)

**INTERNATIONAL SEARCH REPORT**
**Information on patent family members**

International application No.
**PCT/CN2022/084848**

| Patent document cited in search report | Publication date (day/month/year) | Patent family member(s) | Publication date (day/month/year) |
|---|---|---|---|
| CN 104577115 A | 29 April 2015 | JP 2016127002 A | 11 July 2016 |
| | | US 2016190584 A1 | 30 June 2016 |
| | | JP 6157563 B2 | 05 July 2017 |
| CN 114174384 A | 11 March 2022 | WO 2021141376 A1 | 15 July 2021 |
| | | JP 2022536304 A | 15 August 2022 |
| | | EP 3978564 A1 | 06 April 2022 |
| | | KR 20210089093 A | 15 July 2021 |
| CN 106981648 A | 25 July 2017 | None | |
| CN 110431697 A | 08 November 2019 | KR 20180107758 A | 02 October 2018 |
| | | WO 2018174619 A1 | 27 September 2018 |
| | | US 2020295347 A1 | 17 September 2020 |
| | | KR 102323808 B1 | 10 November 2021 |
| | | US 11283058 B2 | 22 March 2022 |
| | | CN 110431697 B | 19 July 2022 |
| CN 103779566 A | 07 May 2014 | None | |
| CN 107706402 A | 16 February 2018 | CN 107706402 B | 18 September 2020 |
| JP 2010287450 A | 24 December 2010 | JP 5376399 B2 | 25 December 2013 |

Form PCT/ISA/210 (patent family annex) (January 2015)